# EUROPÄISCHE PATENTSCHRIFT

(11) **EP 1 078 975 B1**
(45) Veröffentlichungstag und Bekanntmachung des Hinweises auf die Patenterteilung: **29.10.2003**
(21) Anmeldenummer: 00118522.2
(22) Anmeldetag: 25.08.2000
(51) Int. Cl.: C09K 19/00, C09B 67/00, C09D 5/36

(54) **Cholesterisches Schichtmaterial mit verbessertem Farbeindruck und Verfahren zu dessen Herstellung**
Cholesteric layered material with improved colour effect and method of producing the same
Matériau multicouche cholestérique à effet de couleur améliorée et son procédé de fabrication

(30) Priorität: 27.08.1999 DE 19940682
(43) Veröffentlichungstag der Anmeldung: 28.02.2001
(73) Patentinhaber: BASF AKTIENGESELLSCHAFT, 67056 Ludwigshafen (DE)
(72) Erfinder: Prechtl, Frank, Dr., 60318 Frankfurt (DE); Schneider, Norbert, 67122 Altrip (DE); Meyer, Frank, Dr., 69115 Heidelberg (DE); Parker, Robert, 68161 Mannheim (DE); Richter, Volker, 69118 Heidelberg (DE); Heilmann, Peter, Dr., 67098 Bad Dürkheim (DE); Koch, Volker, Dr., 67271 Battenberg (DE); Schuhmacher, Peter, Dr., 68163 Mannheim (DE)
(74) Vertreter: Kinzebach, Werner, Dr.

(56) Entgegenhaltungen:
- WO-A-96/02597
- WO-A-99/11719
- WO-A-99/11733
- DE-A- 4 240 743
- DE-A- 4 418 490
- DE-A- 19 739 263

## Beschreibung

Die Erfindung betrifft cholesterische Schichtmaterialien mit verbessertem Farbeindruck, umfassend wenigstens eine dreidimensional vernetzte, orientierte cholesterische Schicht, Verfahren zu deren Herstellung und deren Verwendung.

Cholesterische Schichten, aus diesen hergestellte Pigmente sowie Zusammensetzungen, welche cholesterische Pigmente enthalten, finden vielfältige Verwendung, beispielsweise im Fahrzeug- oder Fahrzeugzubehörsektor, im EDV-, Freizeit-, Sport- und Spielsektor, als optische Bauelemente, wie Polarisatoren oder Filter, im Kosmetikbereich, im Textil-, Leder- oder Schmuckbereich, bei Geschenkartikeln, bei Schreibutensilien, oder auf Brillengestellen, im Bausektor, im Haushaltssektor, bei Druckerzeugnissen aller Art sowie bei der Herstellung von Lacken oder Farben, weiterhin zur fälschungserschwerenden Bearbeitung von Gegenständen, zur Beschichtung von Gebrauchsgegenständen oder zur Lackierung von Fahrzeugen.

Dabei müssen die cholesterischen Schichten sowie die Pigmente und diese enthaltende Zusammensetzungen eine Reihe von Bedingungen erfüllen, um für die vorgenannten Zwecke einsetzbar zu"sein. Zum einen soll der Farbeindruck möglichst brillant sein, zum anderen soll der Farbeindruck möglichst weitgehend von äusseren Stimuli unabhängig sein, insbesondere soll er in einem weiten Temperaturund Druckbereich sowie gegenüber der Einwirkung von Lösungsmitteln stabil sein. Ausserdem sollen die cholesterischen Schichten möglichst dünn sein, so dass die aus ihnen hergestellten Pigmente eine möglichst geringe Dicke aufweisen, wodurch Kosten verringert, und die Anwendungen erleichtert werden.

Vielfach stellt sich beim Einsatz der aus dem Stand der Technik bekannten cholesterischen Schichten das Problem nicht ausreichender Farbbrillanz. Deshalb lag der vorliegenden Erfindung die Aufgabe zugrunde, cholesterisches Schichtmaterial bereitzustellen, das eine verbesserte Farbbrillanz besitzt.

Die Aufgabe wurde überraschenderweise durch Bereitstellung eines cholesterischen Schichtmaterials gelöst, umfassend wenigstens eine dreidimensional vernetzte, orientierte cholesterische Schicht, wobei die vernetzte(n) cholesterische(n) Schicht(en) im Wesentlichen über die gesamte Schichtdicke ein homogenes Interferenzlinienmuster aufweist (aufweisen). Untersuchungen der Anmelderin haben dabei gezeigt, dass bei herkömmlichen Materialien mit unzureichender Brillanz das anhand von Dünnschnitten beobachtbare Interferenzlinienmuster besonders inhomogen verlief.

Cholesterische Schichtmaterialien welche dieses Homogenitätskriterium erfüllen, zeigen eine überlegene Farbbrillanz. Gleiches gilt für die aus derartigen Schichtmaterialien abgeleiteten Produkte, wie z.B. Pigmente und Folien.

Die erfindungsgemässen Schichtmaterialien sind ausserdem dadurch gekennzeichnet, dass sie eine im Wesentlichen glatte Oberfläche besitzen und die Interferenzlinien im Wesentlichen über die gesamte Dicke der Schicht parallel zur Oberfläche verläufen. Eine Interferenzlinienhomogenität im Sinne der Erfindung liegt insbesondere auch dann vor, wenn einzelne Interferenzlinien in ihrem Verlauf keine Inversionen (Richtungsumkehr) und/oder keine Augenbildung (Ausbildung kreisförmiger Interferenzlinien) zeigen. Geringfügige Abweichungen im Interferenzlinienmuster in der Weise, dass einzelne Linien einen senkrechten Versatz zur Oberfläche zeigen, der in etwa gleich dem Abstand zweier Interferenzlinien ist, sind erfindungsgemäss mitumfasst.

Die Interferenzlinienhomogenität und Oberflächenglattheit ist insbesondere vorteilhaft anhand von Dünnschnitten feststellbar, welche man bei 10 000 bis 20 000-facher Vergrösserung in einem Transmissions-Elektronenmikroskop (TEM) auf den Verlauf der Interferenzlinien untersucht.

Gemäss einer weiteren bevorzugten Ausführungsform wird erfindungsgemäss cholesterisches Schichtmaterial bereitgestellt, dessen Schicht(en) neben der Interferenzlinienhomogenität keinen, z.B. durch externe Stimuli induzierbaren, visuell erkennbaren-Farbshift zeigt (zeigen).

Bevorzugte cholesterische Schichtmaterialien welche zusätzlich dieses Stabilitätskriterium erfüllen, zeigen eine überlegene Farbstabilität unter Einwirkung von Temperatur und/oder Lösungsmittel. Gleiches gilt für die aus derartigen Schichtmaterialien abgeleiteten Produkte, wie z.B. Pigmente und Folien.

Derartige erfindungsgemässen Schichtmaterialien, und davon abgeleiteten Produkte zeichnen sich insbesondere dadurch aus, dass sie neben der oben beschriebenen Interferenzlinienhomogenität keinen visuell erkennbaren Farbshift zeigen bei:
a) Änderung der Temperatur des Schichtmaterials im Bereich von -30°C bis +250°C, insbesondere 0 bis 250°C, oder 0 bis 200°C;
b) Erwärmen auf Temperaturen im Bereich von 80 bis 160°C oder 80 bis 130°C und gleichzeitiger Einwirkung eines Verdünnungsmittels, insbesondere eines organischen Verdünnungsmittels; und/oder
c) 15-minütiger Behandlung bei 80°C in Xylol und anschliessendem Trocknen.

Gemäss einer bevorzugten Ausführungsform wird erfindungsgemäss cholesterisches Schichtmaterial bereitgestellt, dessen Reflexionsmaximum, z.B. nach 15-minütiger Xylolbehandlung bei 80°C, um nicht mehr als etwa 10 nm, wie z.B. 0 bis 8 nm, 0 bis 5 nm oder 0 bis 2 nm, in den höheren oder niedrigeren Wellenlängenbereich verschiebbar ist. Bei einer Veränderung des Reflexionsmaximums im oben angegebenen Bereich liegt kein "visuell erkennbarer Farbshift" im Sinne der Erfindung vor.

In den erfindungsgemässen cholesterischen Schichtmaterialien weist jede cholesterische Schicht eine mittlere Trockenschichtdicke (Schichtdicke der getrockneten und gegebenenfalls vernetzten Schicht) von mindestens einer Pitch-Höhe und von kleiner oder gleich etwa 5 µm, wie z.B. 0,5 bis 3 µm, insbesondere kleiner oder gleich etwa 2 µm, wie z.B. 0,5 bis 2 µm, vorzugsweise kleiner oder gleich etwa 1 µm, wie z.B. 0,5 bis 1 µm, auf.

Sind mehrere Schichten gleichzeitig vorhanden, so sind die Einzelschichtdicken gleich oder verschieden. Damit betrifft ein weiterer Gegenstand cholesterisches Schichtmaterial mit mehreren cholesterischen Schichten gleicher oder verschiedener Dicke und gleicher oder verschiedener chemischer Zusammensetzung, welche jeweils homogenes Interferenzlinienmuster und zusätzlich gegebenenfalls Farbshiftbeständigkeit besitzen.

Gegenstand der Erfindung sind insbesondere auch cholesterische Schichtmaterialien welche dreilagig aufgebaut sind und zwischen zwei erfindungsgemässen cholesterischen Schichten eine transmittiertes Licht teilweise oder vollständig absorbierende Zwischenschicht aufweisen. Die absorbierende Zwischenschicht kann dabei Eigenschaften besitzen, wie sie z.B. in der PCT/EP 98/05544, PCT/EP 98/05545 oder der DE-A-197 57 699 beschrieben sind. Auf die Offenbarung dieser Schutzrechte wird hiermit ausdrücklich Bezug genommen.

Ein weiterer Gegenstand der Erfindung sind cholesterische Pigmente, umfassend wenigstens eine vernetzte orientierte cholesterische Schicht, die erhältlich sind durch Zerkleinern eines oben beschriebenen ein- oder mehrschichtigen cholesterischen Schichtmaterials. Gegenstand der Erfindung sind insbesondere solche Pigmente mit einer mittleren Teilchengrösse im Bereich von 5 bis 50 µm und eine Dicke von bis zu 5 µm, die ausserdem dadurch gekennzeichnet sind, dass die vernetzte(n) cholesterische(n) Schicht(en) Interferenzlinienhomogenität und zusätzlich eine hohe Temperaturstabilität aufweist (aufweisen) und im Temperaturbereich von Raumtemperatur (ca. 20°C) bis etwa 250°C keinen visuell erkennbaren Farbshift zeigt (zeigen). Insbesondere ist bei Temperaturerhöhung von 80°C auf 130°C oder von 80°C auf 160°C kein Farbshift nachweisbar. Insbesondere ist diese Farbshiftstabilität auch dann beobachtbar, wenn die Temperaturerhöhung unter gleichzeitiger Einwirkung von organischen Lösungs- oder Verdünnungsmitteln, wie z.B. Toluol oder Xylol oder anderen in der Lacktechnologie üblichen Lösungs- und Verdünnungsmitteln, erfolgt, oder nach 15 minütiger Behandlung bei 80°C in Xylol und anschliessendem Trocknen.

Gegenstand der Erfindung ist auch ein Verfahren zur Herstellung oben beschriebener cholesterischer Schichtmaterialien durch:
a) Aufbringen, insbesondere Aufgiessen, und dabei Orientieren einer cholesterischen Beschichtungsmasse, die wenigstens eine vernetzbare Substanz unfasst, auf einen Träger unter Ausbildung einer ersten cholesterischen Schicht, wobei der Träger im Wesentlichen chemisch inert gegenüber der aufzutragenden cholesterischen Schicht ist;
b) Trocknen und Vernetzung der aufgetragenen Schicht, wobei die Bedingungen so gewählt sind, dass die erhaltene Schicht im Wesentlichen über die gesamte Schichtdicke ein homogenes Interferenzlinienmuster aufweist und wobei gegebenenfalls die Bedingungen zusätzlich auch so gewählt sind, dass man keinen visuell erkennbaren Farbshift bei Einwirkung von Lösungsmitteln und/oder erhöhter Temperatur beobachtet; und
c) Entfernen des Schichtmaterials vom Träger, nachdem gegebenenfalls eine oder mehrere weitere cholesterische Schichten auf die gemäss Schritt a) erhaltenen Schicht aufgetragen wurden. Die Auftragung, Trocknung und Härtung der weiteren Schichten erfolgt dabei in gleicher Weise wie in den Schritten a) und b).

Erfindungsgemäss wurde insbesondere festgestellt, dass die Interferenzlinienhomogenität und damit die Brillanz des cholesterischen Schichtmaterials wesentlich von der Wahl folgender Verfahrensparameter beeinflusst wird:
a) Trocknertemperatur; und
b) Verweilzeit der getrockneten cholesterischen Schicht bei erhöhter Temperatur im Trockner; und
c) Schichtdicke der aufgetragenen Cholesterschicht.

Weitere Verfahrensparameter, mit deren Hilfe die Homogenität beeinflussbar ist, sind:
d) Scherung der Beschichtungsmasse; und
e) Feststoffgehalt der Beschichtungsmasse.

Mit steigender Trocknertemperatur (z.B. von 60°C bis 100°C) wird nicht nur die Entfernung des Lösungsmittels beschleunigt, sondern auch die Viskosität des cholesterischen Films herabgesetzt, was zu einer deutlich verbesserten Interferenzlinienhomogenität führt.

Desweiteren ist die Interferenzlinienhomogenität über die Länge der Verweilzeit der getrockneten und getemperten Cholesterenschicht im Trockner beeinflussbar. Je länger und je höher die Temperaturen und Verweilzeiten im Trockner sind, desto besser ist die Interferenzlinienhomogenität.

Erfindungsgemäss wurde ausserdem festgestellt, dass eine Verringerung der Schichtdicke für die Interferenzlinienhomogenität förderlich ist.

Die durch hohe Trocknungsintensität und geringe Schichtdicke erzielbaren positiven Effekte können zusätzlich gefördert werden, wenn man die Beschichtungsgeschwindigkeit und damit die Scherkraft nicht zu niedrig wählt.

Erfindungsgemäss wurde zusätzlich festgestellt, dass die Lösungsmittelbeständigkeit des cholesterischen Schichtmaterials wesentlich von den Härtungsbedingungen beeinflussbar ist. Eine bevorzugte Variante erfindungsgemässer Schichtmaterialien betrifft daher solche, die sowohl ein homogenes Interferenzlinienmuster als auch eine ausgezeichnete Lösungsmittelbeständigkeit zeigen.

Die Härtungsbedingungen können erfindungsgemäss über verschiedene Stellgrössen, insbesondere Leistung der Strahlungsquelle, Dauer der Härtung (d.h. Verweilzeit im Strahlungsbereich der Strahlungsquelle) und Schichttemperatur während der Härtung optimal eingestellt werden.

Erfindungsgemäss wurde auch festgestellt, dass durch Variation der Schichttemperatur während der Härtung (z.B. über eine beheizbare Walze) die Haftkraft zwischen einer neu aufgetragenen und der darunterliegenden Cholesterschicht gezielt und damit bedarfsgerecht einstellbar ist. So sind beispielsweise Mehrschichtverbunde mit stabiler Zwischenlagenhaftung und geringer Haftung zum Träger herstellbar, die auf diese Weise gut im Verbund vom Träger abnehmbar sind.

Vorzugsweise setzt man erfindungsgemäss einen Träger ein, der die Orientierung der darauf aufgegossenen cholesterischen Schicht während der Trocknung und Härtung nicht stört. Weiterhin ist bevorzugt, dass der Träger gegenüber der auf ihn aufgegossenen, getrockneten und vernetzten ersten cholesterischen Schicht eine Haftkraft von weniger als etwa 1 cN besitzt. Geeignete Träger sind dabei ausgewählt unter Kunststoff-, Metall-, Glas- oder Keramikträgern.

Eine andere Verfahrensvariante wird so durchgeführt, dass man bei Mehrfachbeschichtung mit cholesterischen Schichten die zweite und gegebenenfalls weitere Schichten im Verbund selektiv von der ersten auf dem Träger befindlichen Schicht entfernen kann..

Gemäss einer bevorzugten Verfahrensvariante setzt man einen Kunststoffträger ein, der eine Releaseschicht, wie z.B aus vernetztem, vorzugsweise orientiertem, cholesterischem Material umfasst, auf welche die erste cholesterische Schicht aufgegossen wird. Andere geeignete Releaseschichtmaterialien sind z.B. Polyamide, Polyacrylate und Teflon. Dies ist besonders dann zweckmässig, wenn eine cholesterische Schicht oder ein Schichtverbund vom Träger entfernt werden muss, z.B. wenn aus dem Schichtmaterial Pigmente hergestellt werden sollen oder Schichtverbünde, welche polarisiertes Licht reflektieren und verletzungsfrei sind und auf einen anderen Träger übertragen werden sollen. Dabei ist die Haftkraft zwischen Kunststoffträger und Releaseschicht vorzugsweise mindestens etwa zwei- bis zehnfach, wie z.B. fünffach, grösser ist als die Haftkraft zwischen Releaseschicht und erster cholesterischer Schicht. Dies begünstigt ein einfaches Ablösen der cholesterischen Schicht oder des Schichtverbundes vom Träger bei gleichzeitigem Verbleib der Releaseschicht auf dem Träger, der dann gegebenenfalls erneut beschichtbar ist.

Bevorzugt setzt man erfindungsgemässe Beschichtungsmassen für die cholesterische(n) Schicht(en) und die Releaseschicht ein, die unabhängig voneinander eine Viskosität im Bereich von etwa 1 bis 50 mPas besitzen. Ausserdem liegt die Beschichtungsgeschwindigkeit im Bereich von etwa 1 bis 800 m/min liegt. Der Feststoffgehalt der Beschichtungsmasse liegt gewöhnlich im Bereich von etwa 30 bis 70 Gew.-%.

Gemäss einer bevorzugten Verfahrensvariante erfolgt die Trocknung bei einer Temperatur im Bereich von etwa 60 bis 150°C, insbesondere etwa 80 bis 120°C. Die Länge der Trocknungszone wird dabei so gewählt, dass die Verweilzeit der Schicht etwa 1 bis 120 s beträgt. Die Trockenschichtdicke liegt bevorzugt bei weniger als 3 µm. Der Feststoffgehalt liegt vorzugsweise bei etwa 30 bis 60 Gew.-%.

Gemäss einer bevorzugten Verfahrensvariante erfolgt die anschliessende Vernetzung der cholesterischen Schicht(en) und der gegebenfalls vorliegenden cholesterischen Releaseschicht durch Strahlungshärtung, insbesondere durch Elektronenstrahlen oder UV-Strahlung, bei gleichzeitigem Erwärmen der zu härtenden Schicht. Dabei liegt die Strahlerleistung im Bereich von etwa 50 bis 200 Watt/cm. Die Härtung erfolgt bevorzugt in einer Inertgasatmosphäre, wie z.B. unter Stickstoff und einer Verweilzeit unter der UV-Lampe von 2 bis 5000 msec.

Die Schichttemperatur wird während der Strahlungshärtung auf mehr als etwa 40°C, bevorzugt auf mindestens 80°C, vorzugsweise mindestens 90°C, wie z.B. 90 bis 120°C eingestellt.

Die jeweils optimale Parameterkombination ist vom Fachmann ausgehend von der erfindungsgemässen Lehre im Rahmen weniger Vorversuche ermittelbar.

Wie die beiliegenden Beispiele zeigen, erhält man cholesterisches Schichtmaterial mit hoher Interferenzlinienhomogenität z.B. dann, wenn man Schichtdicken von etwa 2,5 µm oder weniger, wie z.B. 0,9 µm, wählt, bei einer Temperatur von mehr als etwa 60°C, wie z.B. 85 oder 100°C, über eine Dauer von etwa 5 bis 30 Sekunden trocknet.

Wählt man ausserdem die Härtungsbedingungen so, dass die Strahlerleistung etwa 120 W/cm, die Härtungsdauer von 30 bis 120 msec und die Schichttemperatur im Bereich von 60 bis 100°C liegt, so erhält man Schichtmaterial, das ausserdem hohe Lösungsmittelbeständigkeit zeigt.

Gemäss einer weiteren Variante des erfindungsgemässen Verfahrens bringt man auf die zuletzt aufgetragene cholesterische Schicht eine Folie auf und entfernt die eine oder mehreren cholesterischen Schichten im Verbund mit dieser Folie vom Träger.

Gemäss einer anderen Variante entfernt man die eine oder mehreren cholesterischen Schichten vom Träger durch Abblasen mit Druckluft, Wasserstrahl oder Wasserdampf und vermahlt zu Pigmenten.

Gegenstand der Erfindung sind auch Zusammensetzungen, enthaltend wenigstens ein cholesterisches ein- oder mehrschichtiges.Pigment mit verbesserter Farbshift-Stabilität.

Ein weiterer Gegenstand der Erfindung betrifft die Verwendung erfindungsgemässer Schichtmaterialien oder Pigmente im Fahrzeugoder Fahrzeugzubehörsektor, im EDV-, Freizeit-, Sport- und Spielsektor, in optischen Elementen, im Kosmetikbereich, im Textil-, Leder- oder Schmuckbereich, bei Geschenkartikeln, bei Schreibutensilien, oder auf Brillengestellen, im Bausektor, im Haushaltssektor, bei Druckerzeugnissen aller Art, bei der Herstellung von Lacken oder Farben.

Die durch die erfindungsgemässen cholesterischen Folien bzw. cholesterischen Pigmente erzielbaren Farbeffekte umfassen bedingt durch die Vielfalt der erzielbaren Reflektionswellenlängen auch den UV- und den IR-Bereich sowie selbstverständlich den Bereich des sichtbaren Lichtes. Werden die erfindungsgemässen Pigmente auf Banknoten, Scheckkarten, anderen bargeldlosen Zahlungsmitteln oder Ausweisen aufgebracht (beispielsweise durch bekannte Druckverfahren) oder in sie eingearbeitet, so erschwert dies das identische Kopieren dieser Gegenstände erheblich. Ein weiterer Gegenstand der vorliegenden Erfindung ist somit die Verwendung der erfindungsgemässen Pigmente zur fälschungserschwerenden Bearbeitung von Gegenständen insbesondere von Banknoten, Scheckkarten oder anderen bargeldlosen Zahlungsmitteln oder Ausweisen.

Als optische Elemente im Sinne der.Erfindung sind alle Gegenstände gemeint, welche die optischen Eigenschaften nematischer und/oder cholesterischer Flüssigkristalle ausnutzen. Im Einzelnen können dies auswahlsweise Verzögerungsfolien, Notch-Filter, Farbfilter für Displays, Polarisatoren, aber auch einfach Spiegel für dekorative Zwecke sein. Die dreidimensionale Gestalt der optischen Elemente kann planar, aber auch konkav oder konvex gekrümmt sein.

Insbesondere ist Gegenstand der Erfindung auch die Verwendung obiger Zusammensetzungen zur Beschichtung von Gebrauchsgegenständen oder zur Lackierung von Fahrzeugen.

Ein bevorzugtes Einsatzgebiet sind auch Polarisatoren, umfassend ein erfindungsgemässes Schichtmaterial, gegebenenfalls aufgetragen auf eine Trägerfolie. So können z.B. Breitbandpolarisatoren hergestellt werden, umfassend ein Schichtmaterial mit einer Anzahl von z.B. 3 bis 20 cholesterischen Schichten mit aufeinander abgestimmten Reflexionsmaxima, wobei der Polarisator eine Gesamtdicke (ohne Trägerfolie) im Bereich von etwa 2 bis 50 µm besitzt.

Je nach Anwendungszweck kann das erfindungsgemässe Schichtmaterial auf dem Träger verbleiben, davon abgelöst werden, oder auf einen neuen Träger transferiert werden. So können beispielsweise IR-reflektierende Schichtverbunde (mit transparenter Klebeschicht) auf Glas- oder Plexiglasscheiben transferiert werden.

Geeignete Zusammensetzungen der cholesterischen Schicht sind in DE-A-197 38 368.8 sowie 197 38 369.6 der gleichen Anmelderin beschrieben. Auf die Offenbarung bei der Anmeldung wird in vollem Umfang Bezug genommen. Insbesondere geht aus der DE-A-197 38 369.6 hervor, dass es zweckmässig ist, zur Herstellung cholesterischer Schichten ein durch Verdünnen giessfähig gemachtes cholesterisches Gemisch zu verwenden. Zur Herstellung der Schichten brauchbare cholesterische und nematische Moleküle sind beispielsweise beschrieben in DE-A-43 42 280, 196 02 848, 197 136 38, 195 32 408, 197 04 506, 196 31 658, 197 17 371, 195 41 820, 196 19 460, 197 35 829, 197 44 321 und 197 49 123, EP-A-0 358 208, WO 97/00600, 97/49694, 98/03610, 98/04544, 98/14442, 98/23580 und 98/47979, worauf hiermit ausdrücklich Bezug genommen wird.

Vorzugsweise enthalten die cholesterischen Schichten cholesterische Gemische, die ausgewählt sind unter
a) mindestens einem cholesterischen, polymerisierbaren Monomer;
b) mindestens einem achiralen, nematischen, polymerisierbaren Monomer und einer chiralen Verbindung;
c) mindestens einem cholesterischen, vernetzbaren Polymer;
d) einem cholesterischen Polymer in einem polymerisierbaren Verdünnungsmittel; oder
e) mindestens einem cholesterischen Polymer, dessen cholesterische Phase durch schnelles Abkühlen unter die Glasübergangstemperatur eingefroren werden kann,
im gehärtetem Zustand.

Durch Härtung wird die Orientierung der cholesterischen Moleküle in der Cholesterschicht fixiert. Bei der Verwendung mehrerer cholesterischer Schichten besitzen diese gleiche oder verschiedene optische Eigenschaften. Sie können insbesondere Licht gleicher oder unterschiedlicher Wellenlänge reflektieren, d.h. von gleicher oder von unterschiedlicher Farbe sein. Im letztgenannten Fall lassen sich besonders interessante Farbeffekte erzielen. Beispielsweise sind die Schichten von unterschiedlicher Händigkeit, so dass beispielsweise eine Schicht Licht einer bestimmten Wellenlänge linkszirkular-polarisiert reflektiert, wogegen eine andere Schicht Licht derselben Wellenlänge rechtszirkular-polarisiert reflektiert. Vorteilhafterweise erscheint deshalb beispielsweise ein Lack, der erfindungsgemässe Pigmente in dieser bevorzugten Ausführungsform enthält, besonders brillant, da die Pigmente in der Lackschicht in statistischer Verteilung dem einfallendeh Licht zugewandt sind, so dass der Lack sowohl rechtsals auch linkszirkular-polarisiertes Licht einer bestimmten Wellenlänge reflektiert, wogegen ein Lack, der nur Pigmente mit nur einer cholesterischen Schicht oder mit mehreren cholesterischen Schichten gleicher Händigkeit enthält, entweder das links- oder das rechtszirkular-polarisierte Licht durchlässt. Durch Ausbildung mehrerer Cholesterschichten unterschiedlicher Reflektionswellenlänge sind Breitbandpolarisatoren herstellbar.

Die mehreren Schichten können auch hinsichtlich ihrer mechanischen Eigenschaften gleich oder verschieden sein. Sie können beispielsweise unterschiedliche Dicke oder Sprödigkeit aufweisen.

Eine bevorzugte Gruppe erfindungsgemäss brauchbarer Beschichtungsmassen (obige Gruppe b)) umfasst als nematische Komponente wenigstens eine flüssigkristalline Verbindung der allgemeinen Formel I

Z¹-Y¹-A¹-Y³-M-Y⁴-A²-Y²-Z² (I),

worin
- Z¹, Z²: unabhängig voneinander für einen Rest mit reaktiven, polymerisierbaren Gruppen, stehen;
- Y¹ - Y⁴: unabhängig voneinander für eine chemische Einfachbindung, -O-, -S-, -O-CO-, -CO-O-, -O-CO-O-, -CO-NR-, -NR-CO-, -O-CO-NR-, -NR-CO-O- oder -NR-CO-NR stehen, und R für C₁-C₄-Alkyl steht;
- A¹, A²: unabhängig voneinander für einen Spacer mit 1 bis 30 C-Atomen stehen, in welchem die Kohlenstoffkette gegebenenfalls durch Sauerstoff in Etherfunktion, Schwefel in Thioetherfunktion oder durch nichtbenachbarte Imino-oder C₁-C₄-Alkyliminogruppen unterbrochen ist; und,
- M: für eine mesogene Gruppe steht.

Bevorzugte Reste Z¹ und Z² sind

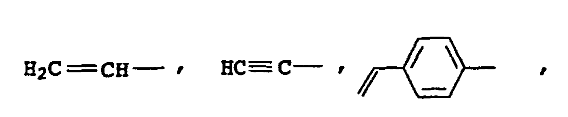

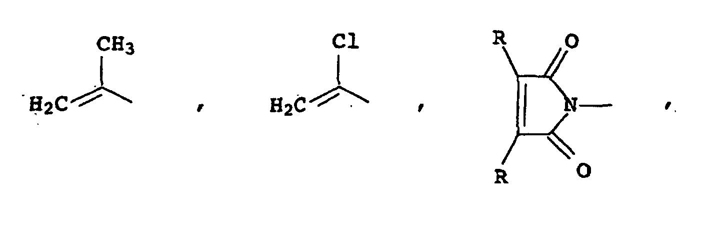

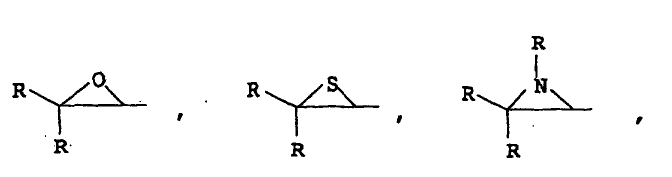

―N=C=O, ―N=C=S und ―O―C≡N,

wobei die Reste R für C₁-C₄-Alkyl stehen und gleich oder verschieden sein können.

Von den reaktiven polymerisierbaren Gruppen können die Cyanate spontan zu Cyanuraten trimerisieren und sind daher bevorzugt zu nennen. Verbindungen mit Epoxid-, Thiiran-, Aziridin-, Isocyanatund Isothiocyanatgruppen benötigen zur Polymerisation weitere Verbindungen mit komplementären reaktiven Gruppen. So können beispielsweise Isocyanate mit Alkoholen zu Urethanen und mit Aminen zu Harnstoffderivaten polymerisieren. Analoges gilt für Thiirane und Aziridine. Die komplementären reaktiven Gruppen können dabei entweder in einer zweiten erfindungsgemässen Verbindung vorhanden sein, die mit der ersteren gemischt wird, oder sie können durch Hilfsverbindungen, die zwei oder mehr dieser komplementären Gruppen enthalten, in das Polymerisationsgemisch eingebracht werden. Enthalten diese Verbindungen jeweils zwei dieser reaktiven Gruppen, so entstehen lineare Polymere mit überwiegend thermoplastischem Charakter. Enthalten die Verbindungen mehr als zwei reaktive Gruppen, so entstehen vernetzte Polymere, die mechanisch besonders stabil sind. Die Maleinimidogruppe eignet sich besonders zur radikalischen Copolymerisation mit olefinischen Verbindungen wie Styrol.

Bevorzugte polymerisierbare Gruppen Z¹ und Z² sind diejenigen, die der radikalischen Polymerisation zugänglich sind, also besonders die olefinisch ungesättigten Gruppen, und unter diesen haben in Kombination mit Y¹ bzw. Y² die Gruppen 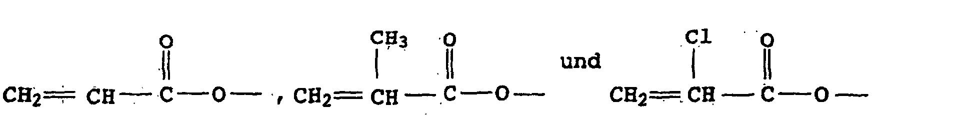 besondere Bedeutung.

Die in den erfindungsgemässen Verbindungen enthaltenen Molekülteile Z¹, Z², A¹, A², M und X sind über Brückenglieder Y¹ - Y⁴ wie -O-, -S-, -CO-O-, -O-CO-, -O-CO-O-, -CO-NR-, -NR-CO-, -O-CO-NR-, -NR-CO-O-, -NR-CO-NR- oder auch über eine direkte Bindung miteinander verknüpft. Chirale polymerisierbare Verbindungen mit einer dieser Gruppen haben die vorteilhafte Eigenschaft besonders niedriger Phasenumwandlungstemperaturen und breiter Phasenbereiche und sind somit für Anwendungen bei Raumtemperatur besonders geeignet. Dies trifft besonders für die Carbonatgruppe zu.

Als Spacer A¹ und A² kommen alle für diesen Zweck bekannten Gruppen in Betracht. Die Spacer enthalten in der Regel 1 bis 30, vorzugsweise 3 bis 12 C-Atome und bestehen aus vorwiegend linearen aliphatischen Gruppen. Sie können in der Kette z.B. durch nicht benachbarte Sauerstoff- oder Schwefelatome oder Imino- oder Alkyliminogruppen wie Methyliminogruppen unterbrochen sein. Als Substituenten für die Spacerkette kommen dabei noch Fluor, Chlor, Brom, Cyan, Methyl und Ethyl in Betracht.

Repräsentative Spacer sind beispielsweise:

-(CH₂)ₚ-, -(CH₂CH₂O)ₘCH₂CH₂-, -CH₂CH₂SCH₂CH₂-, -CH₂CH₂NHCH₂CH₂-,

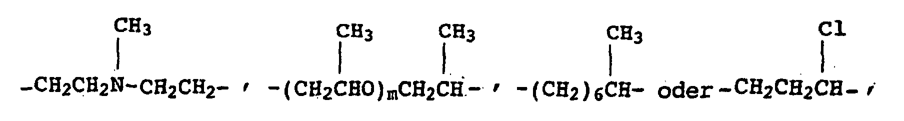

wobei
m für 1 bis 3 und p für 1 bis 12 steht.

Als Reste M können alle bekannten mesogenen Gruppen dienen. Insbesondere kommen Gruppen der Formel Ia

-(-T-Y⁵-)ᵣ-T- (Ia)

in Betracht, in der die Variablen folgende Bedeutung haben:
- T: zweiwertige gesättigte oder ungesättigte iso- oder heterocyclische Reste,
- Y⁵: Brückenglieder gemäss der Definition für Y¹ - Y⁴; -CH₂-O-; -O-CH₂-; -CH=N-, -N=CH- oder -N=N-,
- r: 0, 1, 2 oder 3,
wobei die Reste T und Y⁵ im Falle r > O gleich oder verschieden sein können.

Vorzugsweise ist r gleich 1 oder 2.

Die Reste T können auch durch Fluor, Chlor, Brom, Cyan, Hydroxy oder Nitro substituierte Ringsysteme sein. Bevorzugte Reste T sind:

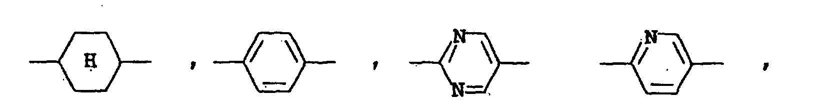

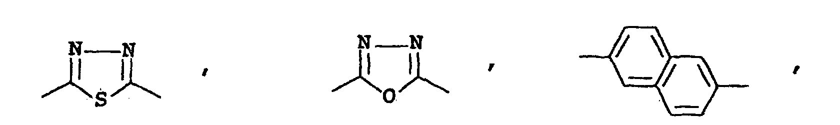

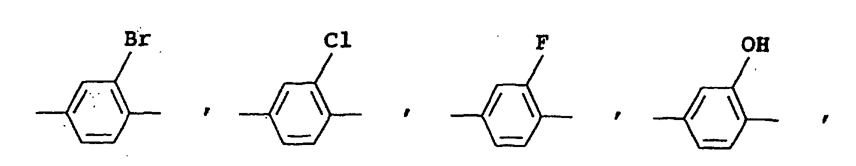

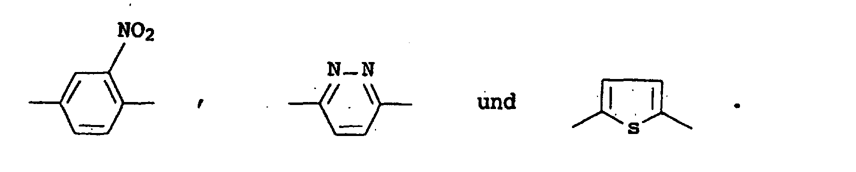

Bevorzugt als mesogene Gruppen M sind z.B.: 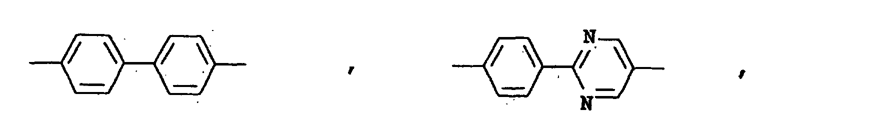 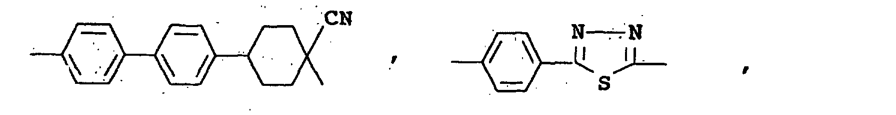 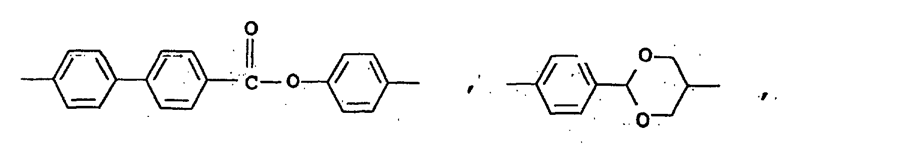 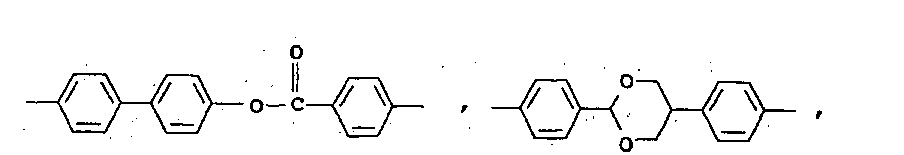 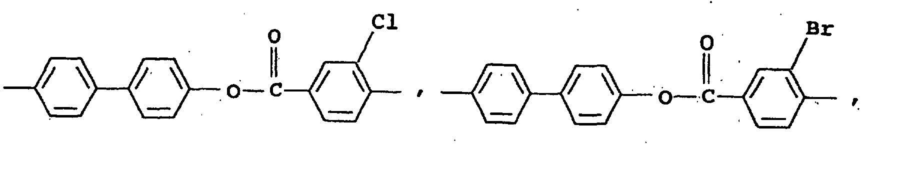 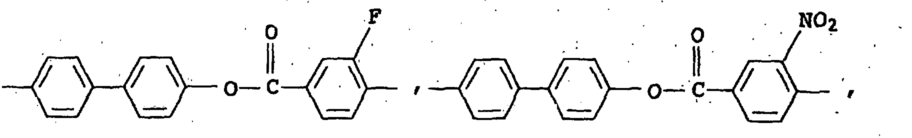 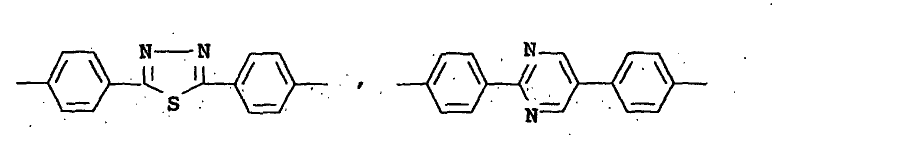 oder

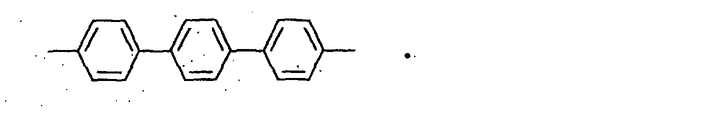

Besonders bevorzugt sind mesogene Gruppen M der folgenden Formeln 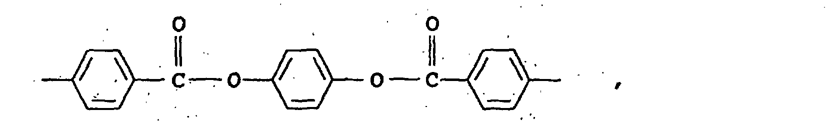 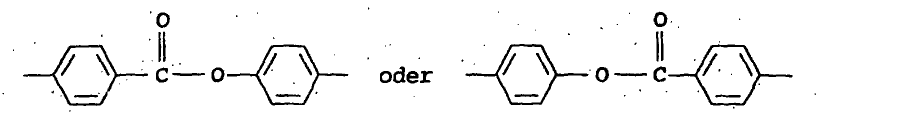 wobei jeder Ring bis zu drei gleiche oder verschiedene Substituenten aus der folgenden Gruppe tragen kann:
C₁-C₂₀-Alkyl, C₁-C₂₀-Alkoxy, C₁-C₂₀-Alkoxycarbonyl, C₁-C₂₀-Mono-alkylaminocarbonyl, C₁-C₂₀-Alkylcarbonyl, C₁-C₂₀-Alkylcarbonyloxy, C₁-C₂₀-Alkylcarbonylamino, Formyl, Halogen, Cyan, Hydroxy oder Nitro.

Bevorzugte Substituenten für die aromatischen Ringe sind neben Fluor, Chlor, Brom, Cyan, Formyl und Hydroxy vor allem kurzkettige aliphatische Reste wie Methyl, Ethyl, n-Propyl, Isopropyl, n-Butyl, Isobutyl, tert.-Butyl sowie Alkoxy-, Alkoxycarbonyl-, Alkylcarbonyl-, Alkylcarbonyloxy-, Alkylcarbonylamino- und Monoalkylaminocarbonylreste, die diese Alkylgruppen enthalten.

Die äusseren Benzolringe der besonders bevorzugten Gruppen M haben vorzugsweise folgende Substitutionsmuster: 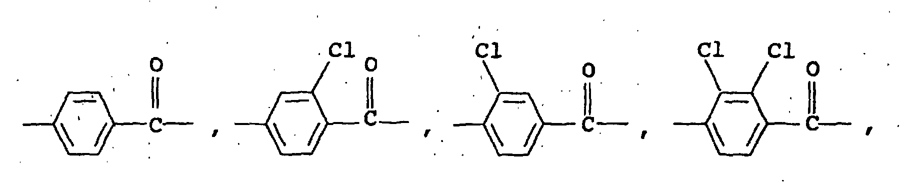 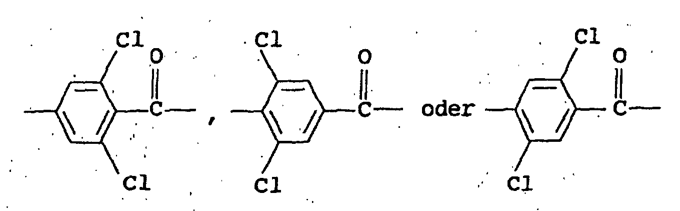 oder sie sind analog mit F, Br, CH₃, OCH₃, CHO, COCH₃, OCOCH₃ oder CN anstelle von C1 substituiert, wobei die Substituenten auch gemischt vorliegen können. Ferner sind die Strukturen 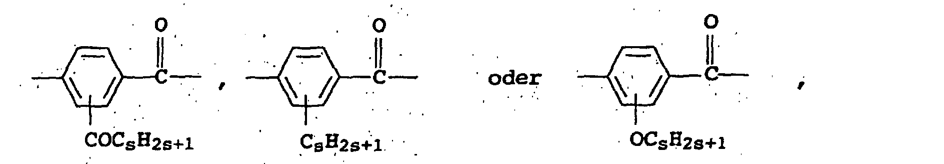 zu nennen, bei denen s 2 bis 20, vorzugsweise 8 bis 15, bedeutet.

Die bevorzugten Substitutionsmuster des mittleren Benzolrings der besonders bevorzugten Gruppen M sind: 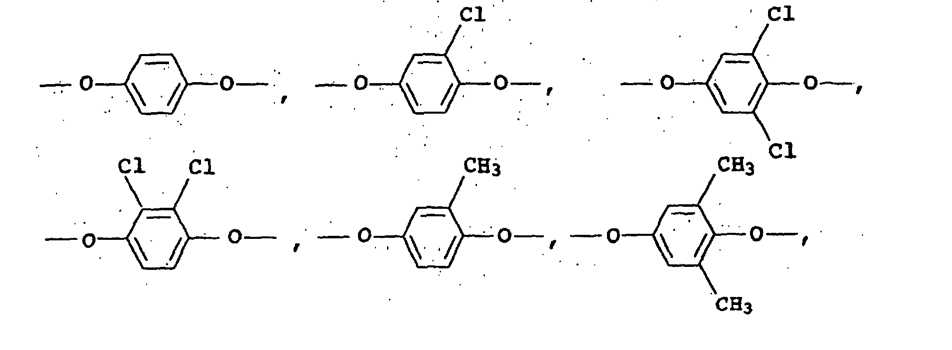 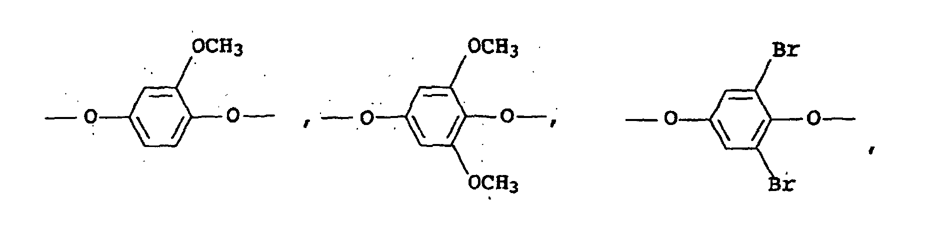 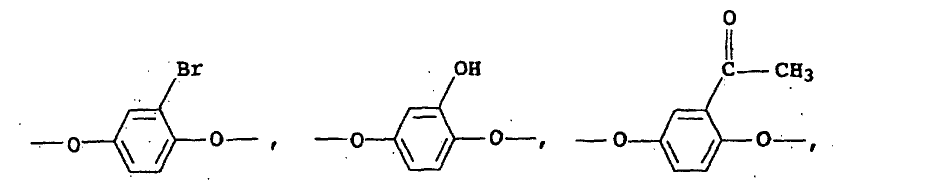 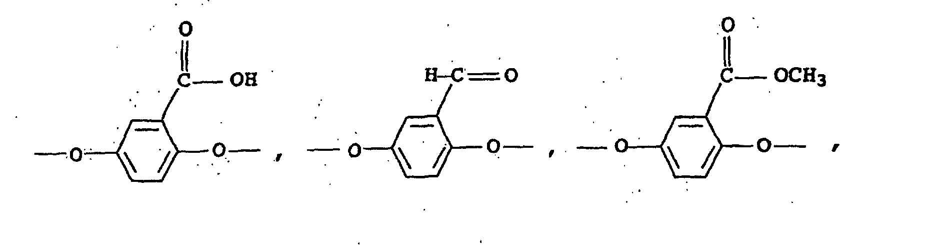 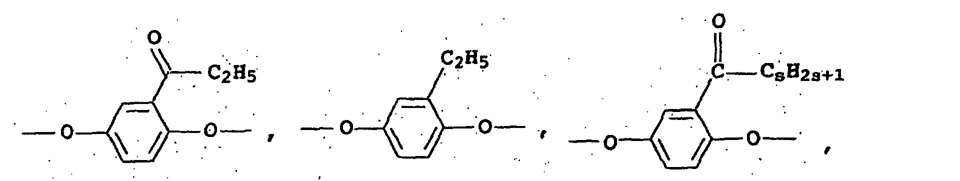 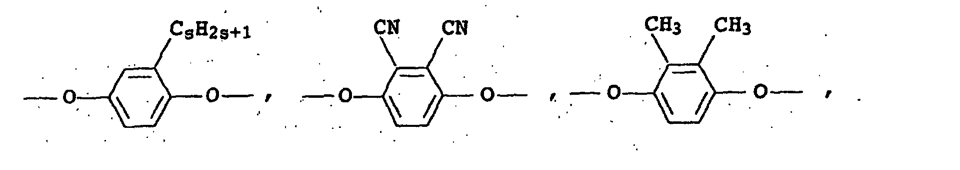 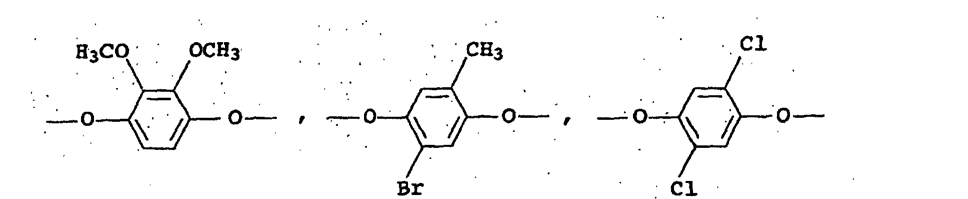 oder

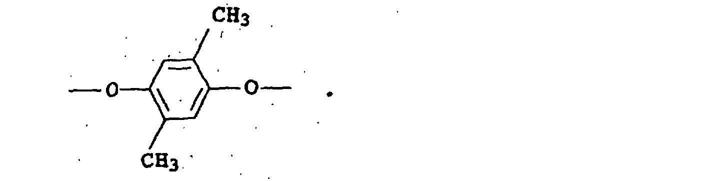

Bevorzugte erfindungsgemässe Verbindungen I sind auch solche, in denen die Restepaare Z¹ und Z², Y¹ und Y², Y³ und Y⁴ sowie A¹ und A² jeweils gleich sind.

Ganz besonders bevorzugt ist die mesogene Gruppe M der folgenden Formel

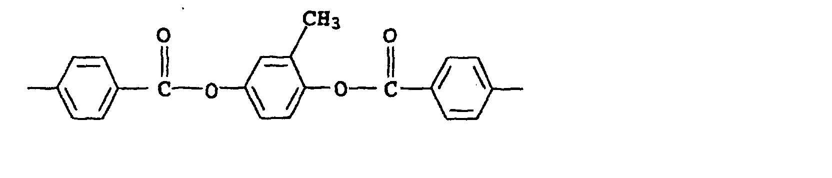

Von den erfindungsgemässen Verbindungen I können auch Mischungen hergestellt werden. Solche Mischungen besitzen meist eine gegenüber den reinen Mischungskomponenten reduzierte Viskosität und haben in der Regel niedrigere flüssigkristalline Phasentemperaturen, so dass sie teilweise für Anwendungen bei Raumtemperatur geeignet sind.

In den Mischungen der erfindungsgemässen Verbindungen können nicht nur z.B. "dreikernige", gegebenenfalls an den Ringen substituierte, mesogene Gruppen M der Formel 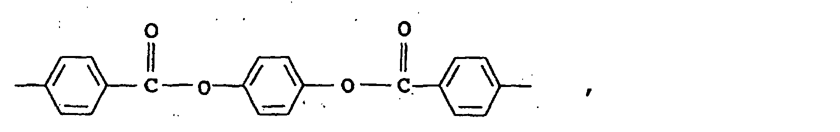 hierbei steht in Formel Ia
- Y⁵: für 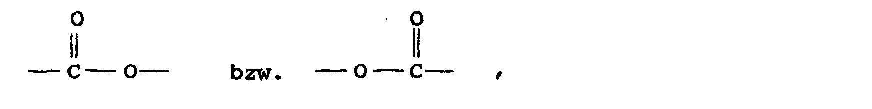
- T: für drei gleiche gegebenenfalls substituierte Reste 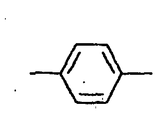 und
- r: für 2,
als Molekülfragmente auftreten, sondern z.B. auch "Zweikernringe" Gruppen M der Formeln 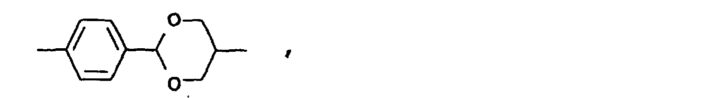 (hierbei steht in Formel Ia
- Y⁵: für eine chemische Einfachbindung,
- T: für unterschiedliche Reste 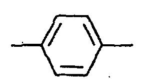 (ungesättigt isocyclisch) und 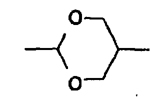 (gesättigt heterocyclisch), und
- r: für 1,)
oder 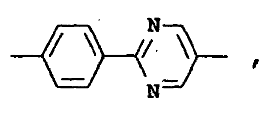 hierbei steht in Formel Ia
- Y⁵: für eine chemische Einfachbindung,
- T: für unterschiedliche Reste 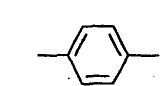 (ungesättigt isocyclisch) und 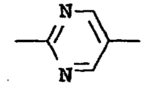 (ungesättigt heterocyclisch), und
- r: für 1.

Besonders bevorzugte "zweikernige" mesogene Gruppen M sind dabei die Fragmente 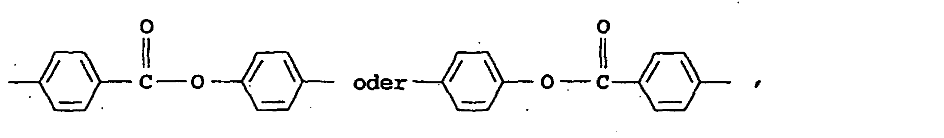 welche zusätzlich noch an den aromatischen Ringen, wie vorstehend beschrieben, substituiert sein können.

Flüssigkristallzusammensetzungen, welche eine oder mehrere der Verbindungen der Formel I enthalten, können zusätzlich auch eine oder mehrere chirale Verbindungen enthalten. Auf diese Weise entstehen cholesterische flüssigkristalline Phasen, die vor allem interessante optische Eigenschaften haben und beispielsweise in Abhängigkeit vom Betrachtungswinkel Licht von unterschiedlicher Wellenlänge reflektieren. Solche Flüssigkristallzusammensetzungen sind insbesondere für den Einsatz in optischen Elementen geeignet.

Als chirale Komponenten sind besonders solche geeignet, die einerseits eine grosse Verdrillungsfähigkeit aufweisen und andererseits gut mischbar mit den flüssigkristallinen Verbindungen sind, ohne die flüssigkristalline Phasenstruktur zu stören.

Bevorzugte chirale Verbindungen, die z.B. in Gemischen gemäss obiger Gruppe b) verwendet werden, sind z.B. solche der allgemeinen Formeln Ib, Ic, Id, Ie

(Z¹-Y⁵)ₙX (Ib), (Z¹-Y¹-A¹-Y⁵)ₙX (Ic),

(P¹-Y⁵)ₙX (Id), (Z¹-Y¹-A¹-Y³-M-Y⁴)ₙX (Ie),

in der die Variablen A¹, Z¹, Y¹, Y³, Y⁴, Y⁵ und n die oben angegebene Bedeutung für die Formel I besitzen, P¹ für einen Rest, ausgewählt unter Wasserstoff, C₁-C₃₀-Alkyl, C₁-C₃₀-Acyl, C₃-C₈-Cycloalkyl, gegebenenfalls substituiert durch ein bis drei C₁-C₆-Alkyl und wobei die Kohlenstoffkette der Alkyl-, Acyl- und Cycloalkylreste durch Sauerstoff in Etherfunktion, Schwefel in Thioetherfunktion oder durch nichtbenachbarte Imino- oder C₁-C₄-Alkyliminogruppen unterbrochen sein kann, steht, n für eine Zahl von 1 bis 6 steht und X ein n-wertiger chiraler Rest ist.

Reste X sind beispielsweise 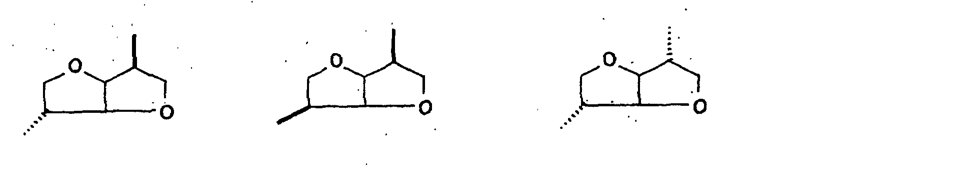 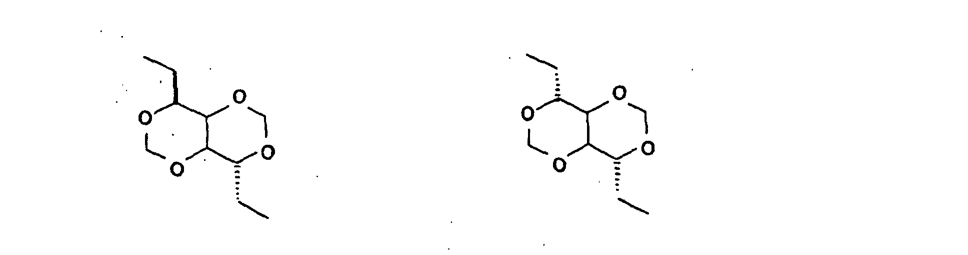 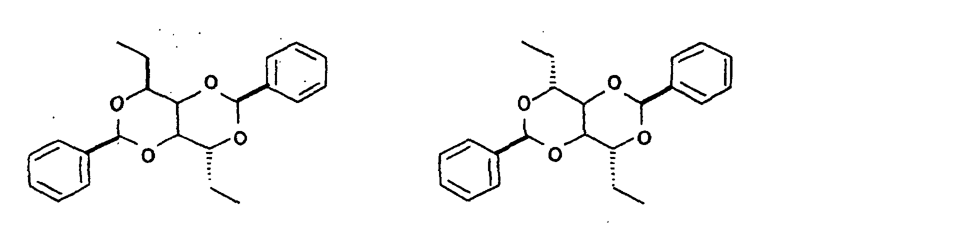 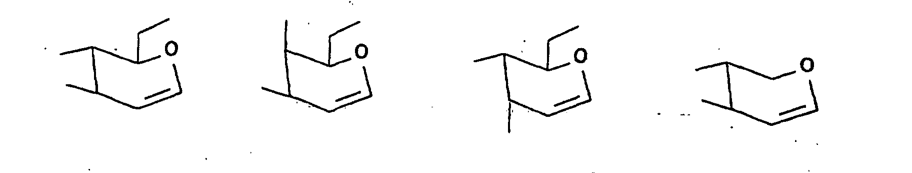 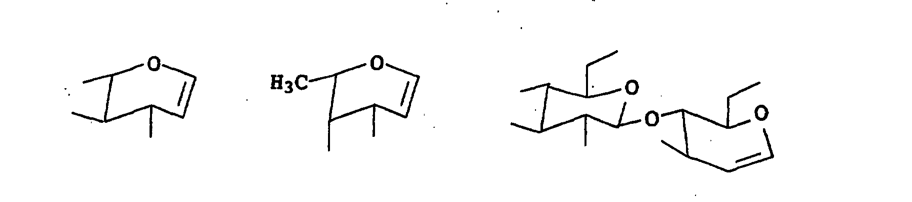 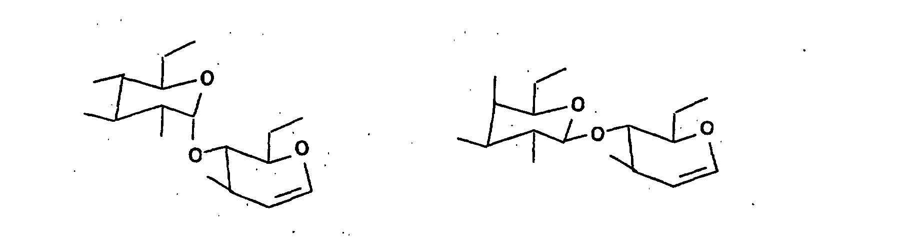 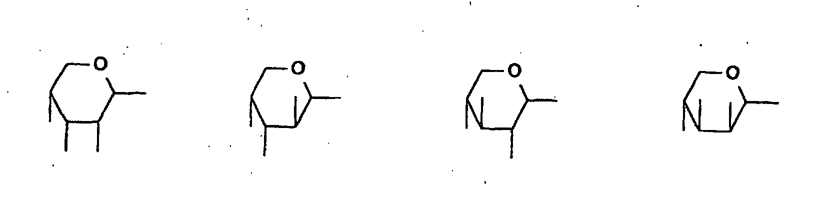 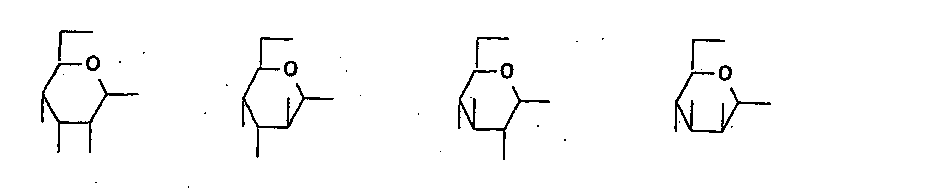 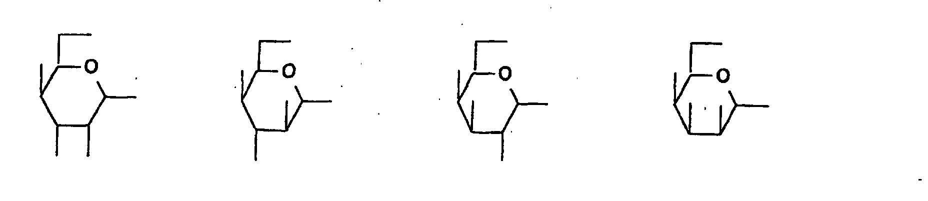 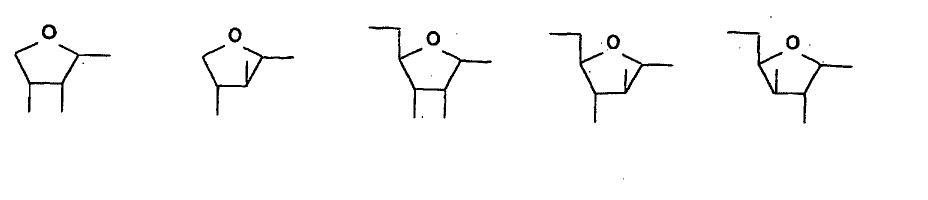 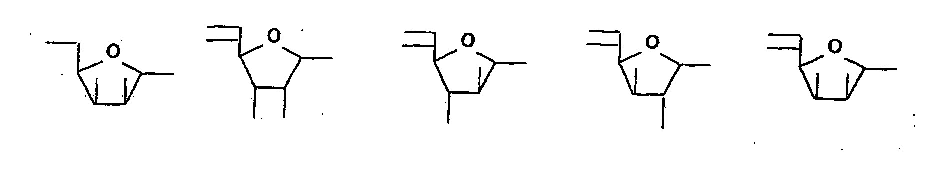 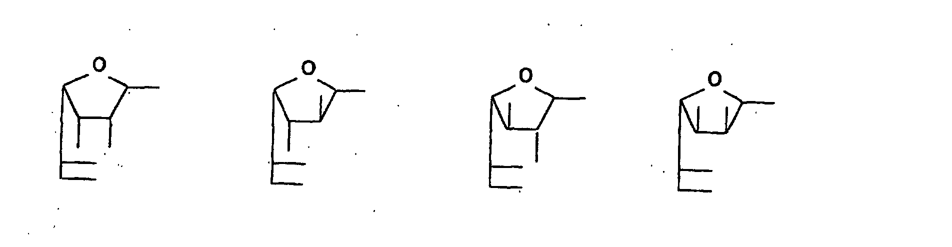 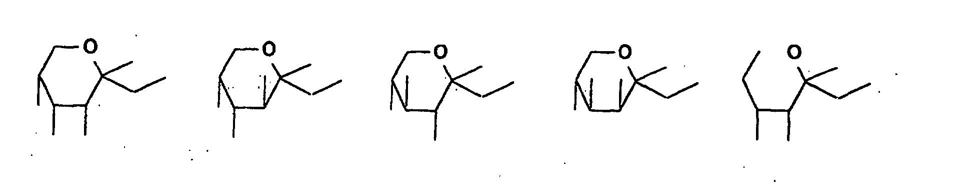 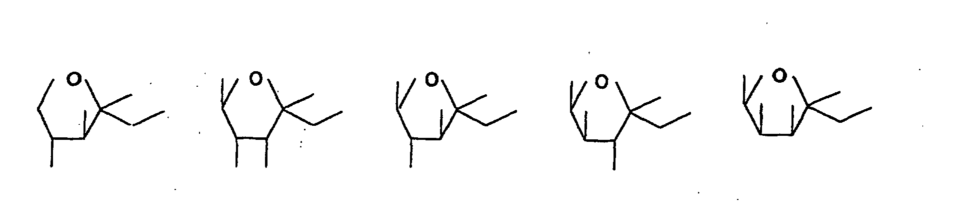 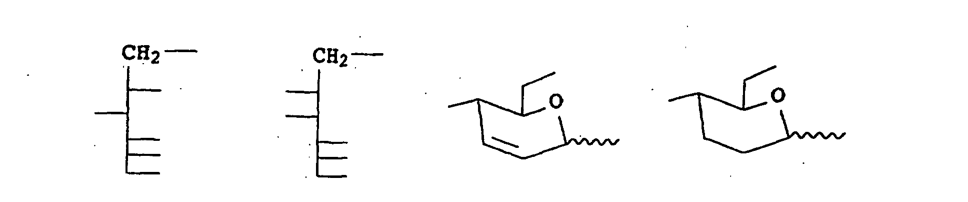 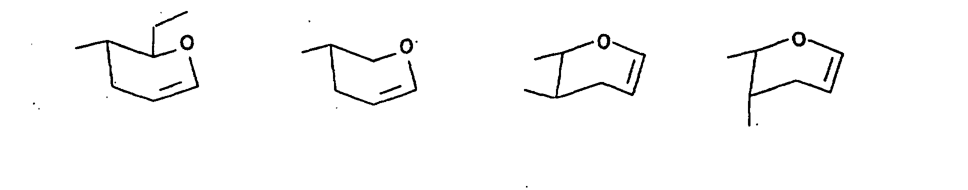 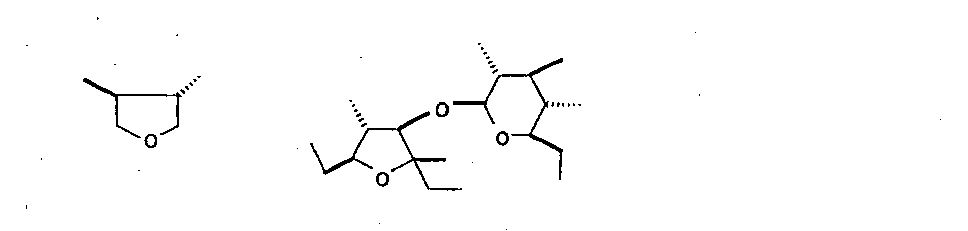 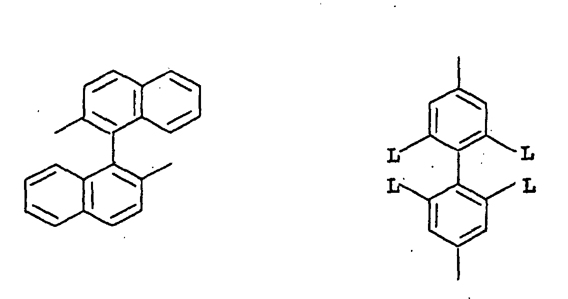 wobei
- L: C₁- bis C₄-Alkyl, C₁-C₄-Alkoxy, Halogen, COOR, OCOR, CONHR oder NHCOR ist und R C₁-C₄-Alkyl bedeutet.
(Die endständigen Striche in den aufgeführten Formeln geben die freien Valenzen an).

Besonders bevorzugt sind z.B.

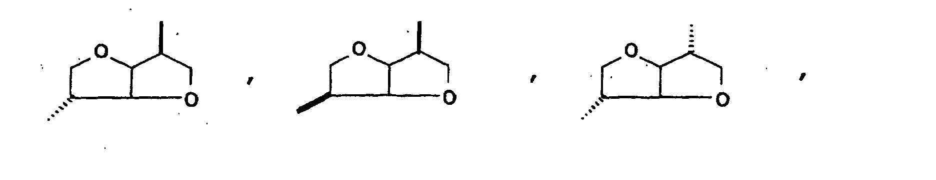

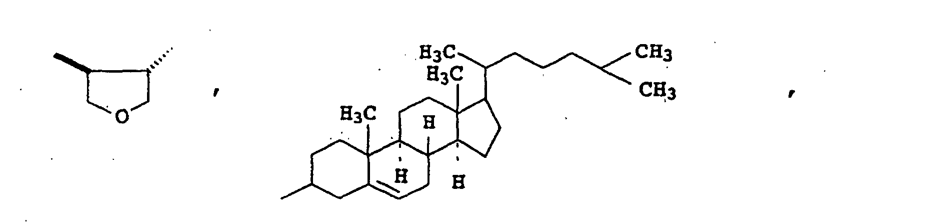

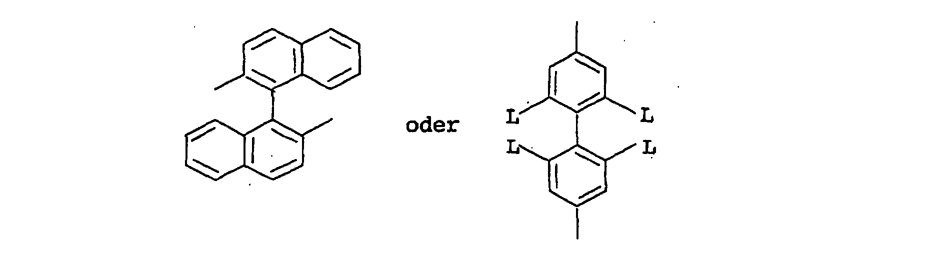

Diese und weitere bevorzugte chirale Komponenten sind beispielsweise in der DE-A 43 42 280 und in den deutschen Patentanmeldungen 19520660.6 und 19520704.1 genannt.

Weitere geeignete Reste X sind: 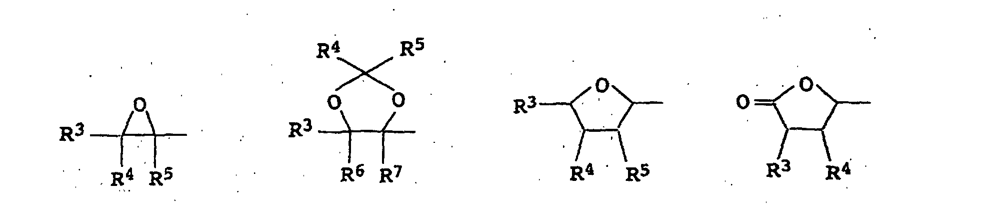 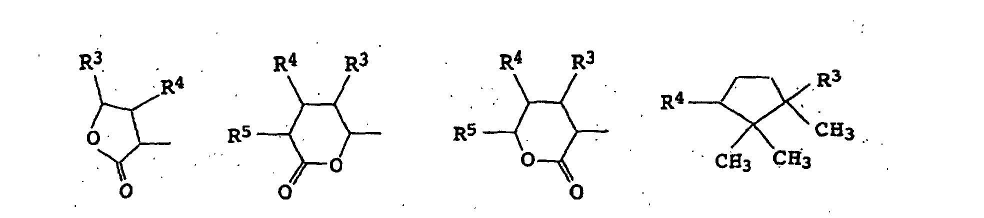 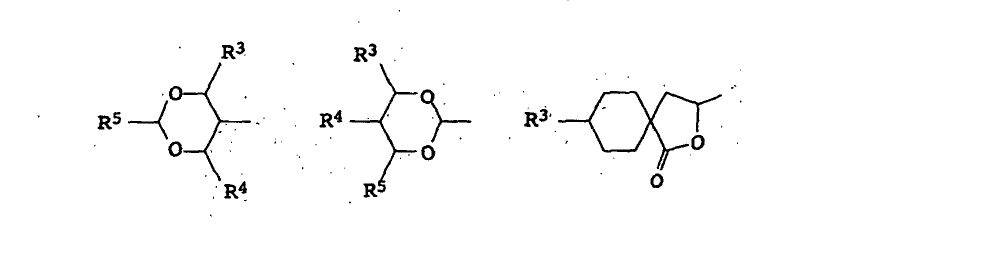 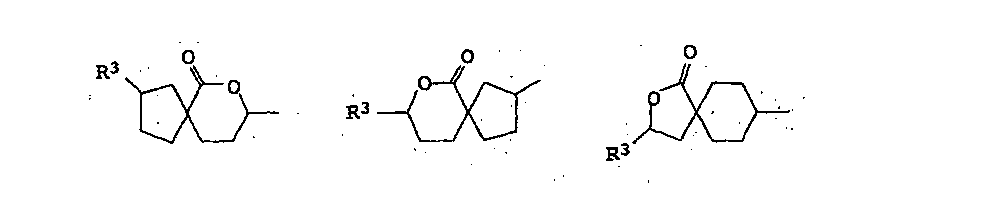 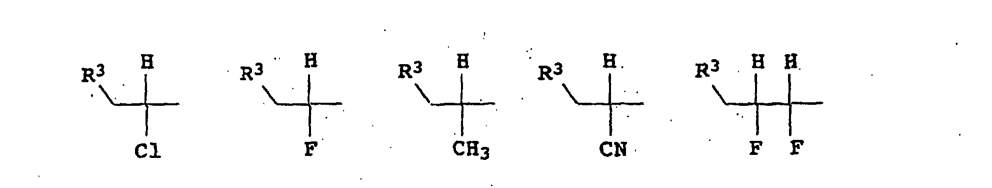 worin R³, R⁴, R⁵ R⁶ und R⁷ gleich oder verschieden sind und für
- Wasserstoff, oder
- einen geradkettigen oder verzweigten Alkylrest mit oder ohne asymmetrischem Kohlenstoffatom mit 1 bis 16 C-Atomen, wobei
   eine oder mehrere nicht benachbarte und nicht terminale CH₂-Gruppen durch O ersetzt sein können und/oder
   eine oder.zwei CH₂-Gruppen durch CH=CH- ersetzt sein können, stehen, oder
- R⁴ und R⁵ zusammen auch -(CH₂)₄- oder -(CH₂)₅- bedeuten können, wenn sie an ein Oxiran-, Dioxolan-, Tetrahydrofuran-, Tetrahydropyran-, Butyrolacton- oder Valerolacton-System gebunden sind.

Besonders bevorzugte chirale Komponenten sind folgende Verbindungen (A) bis (G):

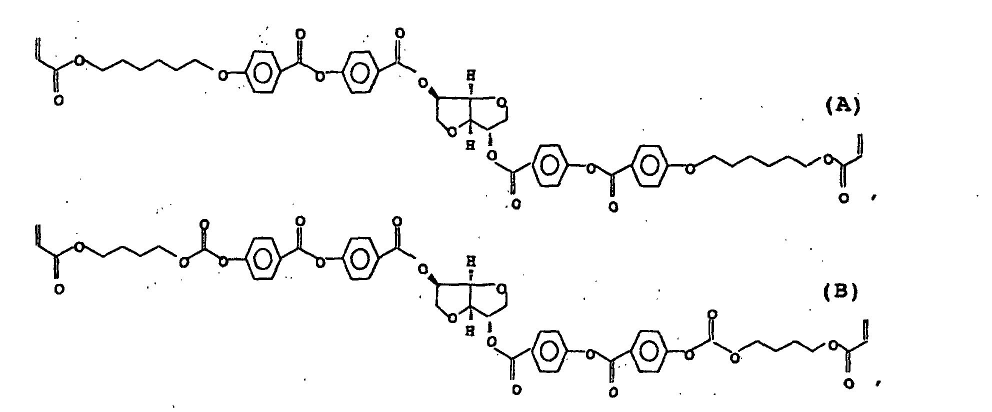

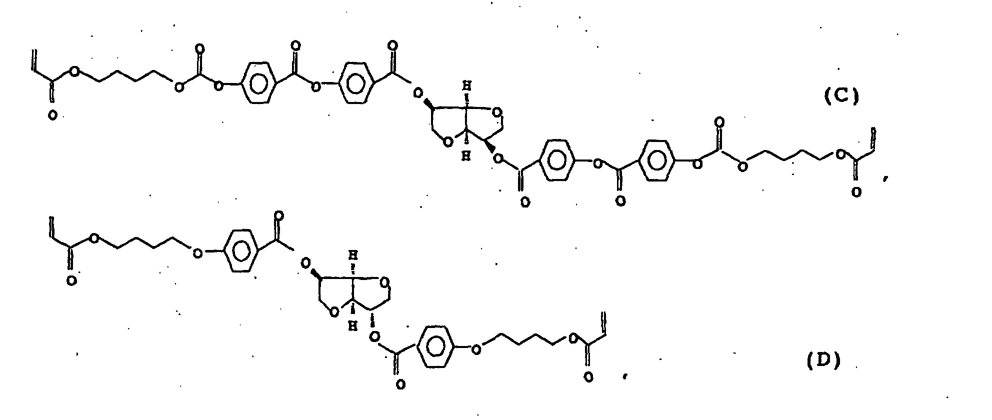

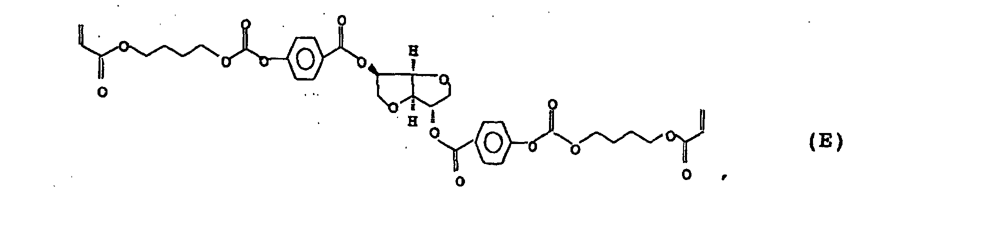

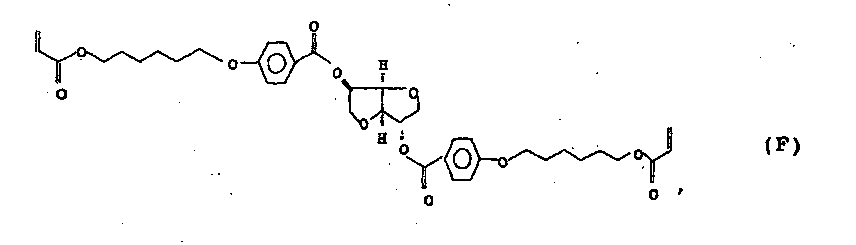

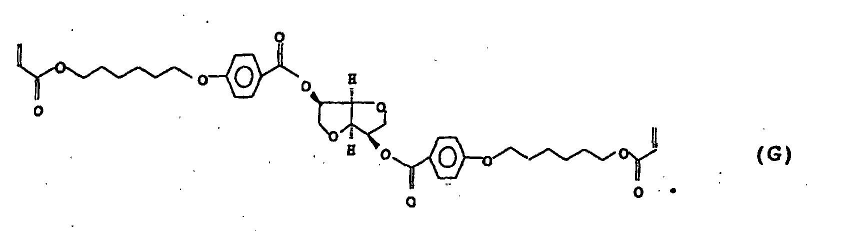

Als nichtlimitierende Beispiele für geeignete Nematen können folgende Verbindungen der Formeln (H) und (K) genannt werden: 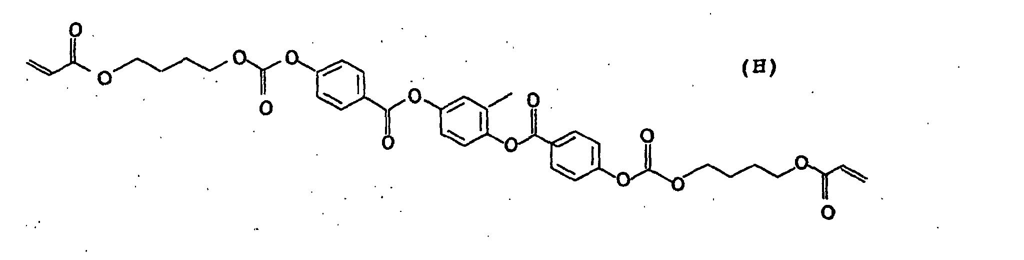 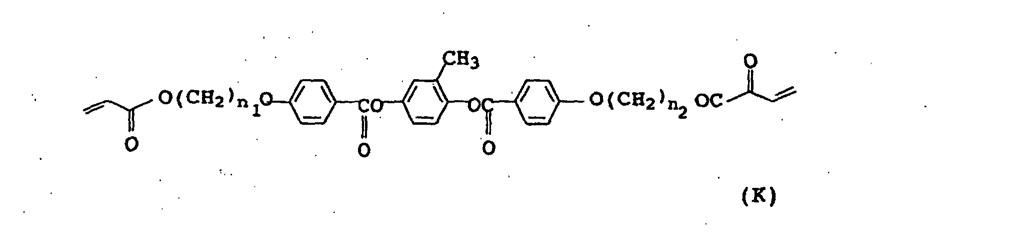 worin n₁ und n₂ unabhängig voneinander für 2, 3, 4 oder 6 stehen,
wobei das Monomer der Formel (K) vorzugsweise als Gemisch von Verbindungen mit n₁/n₂ gleich 2/3, 2/4, 2/6, 3/4, 3/6, 4/4, 4/6, 6/4 und 6/6 eingesetzt wird. In den Verbindungen der Formeln (H) und (K) kann der Methylsubstituent am zentralen Benzolkern gegebenenfalls auch durch ein Wasserstoffatom ersetzt sein.

Polymerisiert man die erfindungsgemässen Verbindungen oder Flüssigkristallzusammensetzungen, so lässt sich der flüssigkristalline Ordnungszustand fixieren. Die Polymerisation kann. je nach polymerisierbarer Gruppe z.B. thermisch oder photochemisch erfolgen. Zusammen mit den erfindungsgemässen Verbindungen oder Flüssigkristallzusammensetzungen lassen sich dabei auch andere Monomere copolymerisieren. Diese Monomeren können andere polymerisierbare flüssigkristalline Verbindungen, chirale Verbindungen, die ebenfalls bevorzugt kovalent einpolymerisiert werden, oder übliche Vernetzungsmittel wie mehrfachvalente Acrylate, Vinylverbindungen oder Epoxide sein. Besonders im Fall von Isocyanaten, Isothiocyanaten oder Epoxiden als polymerisierbare Flüssigkristallverbindungen ist das Vernetzungsmittel bevorzugt ein mehrfachvalenter Alkohol, so dass beispielsweise Urethane gebildet werden können. Das Vernetzungsmittel muss in seiner Menge so an die Polymerisationsverhältnisse angepasst werden, dass einerseits eine zufriedenstellende mechanische Stabilität erreicht wird, andererseits aber das flüssigkristalline Phasenverhalten nicht beeinträchtigt wird. Die Menge des Vernetzungsmittels hängt daher von der speziellen Anwendung der Polymerisate ab. Zur Herstellung von Pigmenten ist eine grössere Menge Vernetzungsmittel vorteilhaft, zur Herstellung thermoplastischer Schichten oder z.B. für Display-Orientierungsschichten ist eine geringere Menge Vernetzungsmittel erforderlich. Die Menge des Vernetzungsmittels kann durch einige Vorversuche ermittelt werden.

Eine weitere Modifizierung der aus den erfindungsgemässen Verbindungen oder Flüssigkristallzusammensetzungen hergestellten Polymerisationsprodukte ist durch die Zugabe polymerer Hilfsstoffe vor der Polymerisation möglich. Solche Hilfsstoffe sollten vorzugsweise entweder in den Ausgangsmischungen löslich sein oder aber in einem mit den Ausgangsmischungen verträglichen organischen Lösungsmittel. Typische Vertreter solcher polymerer Hilfsstoffe sind, z.B. Polyester, Celluloseester, Polyurethane sowie polyether- oder polyestermodifizierte oder auch unmodifizierte Silikone. Die für den gewünschten Zweck gegebenenfalls zuzugebende Menge an polymerem Hilfsstoff, seine chemische Natur sowie möglicherweise noch Menge und Art eines Lösungsmittels sind dem Fachmann in der Regel geläufig oder lassen sich ebenfalls experimentell durch wenige Vorversuche ermitteln.

Neben den Verbindungen der Formeln Ia bis Ie können noch weitere Verbindungen zugemischt werden, welche nichtkovalent in das polymere Netzwerk eingebaut werden. Dies können beispielsweise kommerziell erhältliche nematische Flüssigkristalle sein.

Weitere Zusatzstoffe können auch Pigmente, Farbstoffe sowie Füllstoffe sein.

Bei den Pigmenten können dies sein anorganische Verbindungen wie beispielsweise Eisenoxide, Titanoxid und Russ, bei den organischen Verbindungen z.B. Pigmente oder Farbstoffe aus den Klassen der Monoazopigmente, Monoazofarbstoffe sowie deren Metallsalze, Disazopigmente, kondensierte Disazopigmente, Isoindolinderivate, Derivate der Naphthalin- oder Perylentetracarbonsäure, Anthrachinonpigmente, Thioindigoderivate, Azomethinderivate, Chinacridone, Dioxazine, Pyrazolochinazolone, Phthalocyaninpigmente oder basische Farbstoffe wie Triarylmethanfarbstoffe und deren Salze.

Vor der Auftragung werden die flüssigkristallinen Materialien in einem leichtflüchtigen Lösungsmittel gelöst und gegebenenfalls mit notwendigen Additiven kombiniert. Als Additive können Polymerisationsinhibitoren beziehungsweise -initiatoren, Verlaufshilfsmittel, Entlüfter, Haftmittel, Bindemittel, Dispergiermittel etc. eingesetzt werden.

Die cholesterischen Schichten sowie die gegebenenfalls vorhandene Release-Schicht werden hergestellt, indem man auf einen, vorzugsweise beweglichen, Träger eine Schicht des gegebenenfalls, reaktiven, giessfähigen cholesterischen Gemischs, vorzugsweise durch Giessen, aufbringt und eine feste Cholesterenschicht ausbildet. Vorzugsweise trägt man das reaktive, giessfähige cholesterische Gemisch in.der isotropen Phase auf. In einer bevorzugten Ausführungsform verdünnt man das reaktive, giessfähige cholesterische Gemisch vor dem Giessen und bildet die feste Cholesterenschicht gegebenenfalls unter (d.h. während oder nach) Entfernen des Verdünnungsmittels aus. Die Ausbildung der festen Cholesterenschicht kann durch Vernetzung, durch Polymerisation oder durch schnelles Abkühlen unter die Glasübergangstemperatur (Einfrieren der cholesterischen Phase) erfolgen, wobei unter Vernetzung die kovalente Verknüpfung polymerer Verbindungen und unter Polymerisation die kovalente Verknüpfung monomerer Verbindungen zu Polymeren verstanden wird. unter Härtung wird Vernetzung, Polymerisation oder das Einfrieren der cholesterischen Phase verstanden. Ein Gemisch wird im Rahmen der vorliegenden Erfindung als reaktiv bezeichnet, wenn wenigstens eine in dem Gemisch enthaltene Verbindung zur Ausbildung kovalenter Verknüpfungen befähigt ist.

Der bewegliche Träger ist vorzugsweise bandförmig und besteht z.B. aus einer Metall-, Papier- oder Kunststofffolienbahn. Das cholesterische Gemisch wird vorzugsweise mit einem Anteil an Verdünnungsmittel von etwa 5 bis 95 Gew.-%, insbesondere etwa 30 bis 80 Gew.-%, insbesondere etwa 40 bis 70 Gew.-%, besonders bevorzugt etwa 55 bis 60 Gew.-%, jeweils bezogen auf das Gesamtgewicht des aufzubringenden Gemischs, aufgetragen.

In dem erfindungsgemässen Verfahren einsetzbare Verdünnungsmittel sind beispielsweise lineare oder verzweigte Ester, besonders Essigsäureester wie Ethyl- und Butylacetat, cyclische Ether und' Ester, Alkohole, Lactone, aliphatische und aromatische Kohlenwasserstoffe, wie Toluol, Xylol und Cyclohexan, sowie Ketone, Amide, N-Alkylpyrrolidone, besonders N-Methylpyrrolidon, und insbesondere Tetrahydrofuran (THF), Dioxan und Methylethylketon (MEK). Bevorzugt sind organische Verdünnungsmittel mit einem Siedepunkt von unter 140°C.

Geeignete Verdünnungsmittel sind weiterhin beispielsweise Ether und cyclische Ether wie Tetrahydrofuran oder Dioxan, chlorierte Kohlenwasserstoffe, wie Dichlormethan, 1,1,2,2-Tetrachlorethan, 1-Chlornaphthalin, Chlorbenzol oder 1,2-Dichlorbenzol. Diese Verdünnungsmittel sind besonders für Polyester und Polycarbonate geeignet. Geeignete Verdünnungsmittel für Cellulosederivate sind beispielsweise Ether, wie Dioxan oder Ketone, wie Aceton. Werden Copolyisocyanate als Polymere der Gruppe d) eingesetzt, ist es sinnvoll, polymerisierbare Verdünnungsmittel, wie in der US-A-08,834,745 beschrieben, zu verwenden. Solche polymerisierbaren Verdünnungsmittel sind beispielsweise
- Ester α,β-ungesättigter Mono- oder Dicarbonsäuren, insbesondere C₃-C₆-Mono- oder Dicarbonsäuren, mit C₁-C₁₂-Alkanolen, C₂-C₁₂-Alkandiolen oder deren C₁-C₆-Alkylether und Phenylether, beispielsweise Acrylate und Methacrylate, Hydroxyethyl- oder Hydroxypropylacrylat oder -methacrylat sowie 2-Ethoxyethylacrylat oder -methacrylat;
- Vinyl-C₁-C₁₂-alkylether, wie Vinylethyl-, Vinylhexyl- oder Vinyloctylether;
- Vinylester von C₁-C₁₂-Carbonsäuren, wie Vinylacetat, Vinylpropionat Vinyllaurat;
- C₃-C₉-Epoxide, wie 1,2-Butylenoxid, Styroloxid;
- N-Vinylpyrrolidon, N-Vinylcaprolactam, N-Vinylformamid;
- vinylaromatische Verbindungen, wie Styrol, α-Methylstyrol, Chlorstyrol und
- Verbindungen mit zwei oder mehreren vernetzbaren Gruppen wie Diester von Diolen (einschliesslich Polyethylenglykole) mit Acryl- oder Methacrylsäure oder Divinylbenzol.

Beispiele für bevorzugte polymerisierbare Verdünnungsmittel sind 2-Ethoxyethylacrylat, Diethylenglykoldiacrylat, Ethylenglykoldimethacrylat, Diethylenglykoldimethacrylat, Triethylenglykoldimethacrylat, Diethylenglykolmonomethyletheracrylat, Phenoxyethylacrylat und Tetraethylenglykoldimethacrylat. Ein besonders bevorzugtes polymerisierbares Verdünnungsmittel ist Styrol. Auch die Gemische können in kleinen Mengen polymerisierbare Verdünnungsmittel zusätzlich zu dem inerten Verdünnungsmittel enthalten. Bevorzugte zusetzbare, polymerisierbare Lösungsmittel sind Acrylate, insbesondere höherfunktionelle Acrylate wie Bis-, Tris- oder Tetraacrylate, besonders bevorzugt hochsiedende Oligoacrylate. Die bevorzugte Zusatzmenge liegt bei etwa 5 Gew.-%, bezogen auf das Gesamtgewicht des Gemischs.

Gegebenenfalls kann auch Wasser dem Verdünnungsmittel zugesetzt sein oder sogar als alleiniges Verdünnungsmittel eingesetzt werden.

Das vernetzbare oder polymerisierbare Gemisch kann für die photochemische Polymerisation handelsübliche Photoinitiatoren enthalten. Für eine Härtung durch Elektronenstrahlen sind solche nicht notwendig. Geeignete Photoinitiatoren sind beispielsweise Isobutyl-benzoinether, 2,4,6-Trimethylbenzoyldiphenyl-phosphinoxid, 1-Hydroxycyclohexyl-phenylketon, 2-Benzyl-2-dimethylamino-1-(4-morpholinophenyl)-furan-1-on, Mischungen von Benzophenon und 1-Hydroxycyclohexyl-phenylketon, 2,2-Dimethoxy-2-phenylacetophenon, perfluorierte Diphenyltitanocene, 2-Methyl-1-(4-[methylthio]phenyl)-2-(4-morpholinyl)-1-propanon, 2-Hydroxy-2-methyl-1-phenyl-propan-1-on, 4-(2-Hydroxyethoxy)phenyl-2-hydroxy-2-propylketon, 2,2-Diethoxyacetophenon, 4-Benzoyl-4'-methyldiphenyl-sulfid, Ethyl-4-(dimethylamino)benzoat, Mischungen von 2-Isopropylthioxanthon und 4-Isopropyl-thioxanthon, 2-(Dimethylamino)ethylbenzoat, d,1-Campherchinon, Ethyl-d,1-campherchinon, Mischungen von Benzophenon und 4-Methylbenzophenon, Benzophenon, 4,4'-Bisdimethylamin-benzophenon, (η⁵-Cyclopentadienyl)(η⁶-Isopropylphenyl)-eisen(II)-hexafluoro-phosphat, Triphenylsulfonium-hexafluorophosphat oder Mischungen von Triphenylsulfoniumsalzen, sowie Butandioldiacrylat, Dipropylenglykoldiacrylat, Hexandioldiacrylat, 4-(1,1-Dimethylethyl)cyclohexylacrylat, Trimethylolpropantriacrylat und Tripropylenglykoldiacrylat.

Die Brillanz der Pigmentschicht kann durch Zugabe geringer Mengen geeigneter Verlaufsmittel gesteigert werden. Einsetzbar sind etwa 0,005 bis 1 Gew.-%, insbesondere 0,01 bis 0,5 Gew.-%, bezogen auf die Menge an eingesetztem Cholester. Geeignete Verlaufsmittel sind beispielsweise Glykole, Siliconöle und insbesondere Acrylatpolymere, wie die unter der Bezeichnung Byk 361 bzw. Byk 358 der Firma Byk-Chemie erhältlichen Acrylatcopolymere und die unter der Bezeichnung Tego flow ZFS 460 der Fa. Tego erhältlichen modifizierten silikonfreien Acrylatpolymere.

Gegebenenfalls enthält das polymerisierbare oder vernetzbare Gemisch auch Stabilisatoren gegen UV- und Wettereinflüsse. Hierfür eignen sich zum Beispiel Derivate des 2,4-Dihydroxybenzophenons, Derivate des 2-Cyan-3,3-diphenylacrylates, Derivate des 2,2',4,4'-Tetrahydroxybenzophenons, Derivate des Orthohydroxyphenylbenztriazols, Salicylsäureester, Orthohydroxyphenyl-s-triazine oder sterisch gehinderte Amine. Diese Stoffe können allein oder vorzugsweise in Form von Gemischen eingesetzt werden.

Vorzugsweise weist das giessfähige, reaktive cholesterische Gemisch eine Viskosität im Bereich von etwa 0,1 bis 50 mPas, insbesondere etwa 1 bis 10 mPas, gemessen bei 23°C, auf.

Besonders bevorzugt bringt man das cholesterische Gemisch mit einer Geschwindigkeit von etwa 1 bis 800 m/min, insbesondere etwa 5 bis 100 m/min, auf den Träger auf.

In einer bevorzugten Ausführungsform des Verfahrens wird das Gemisch mittels eines roll coaters, reverse roll coaters, knife reverse roll coaters, slot die, eines kiss coaters oder insbesondere mittels eines Extrusionsgiessers, Rakelgiessers oder Messergiessers, ganz besonders bevorzugt mittels eines' Rakelgiessers oder Messergiessers, auf die Unterlage aufgebracht.

Vorteilhaft wird das Gemisch mittels einer Giessvorrichtung aufgetragen, die das Gemisch beim Auftragen einem hohen Schergefälle unterwirft. Massnahmen zur Beeinflussung des Schergefälles sind dem mit Giessvorrichtungen vertrauten Fachmann geläufig.

Vorzugsweise wird eine Giessvorrichtung verwendet deren Giessspaltbreite im Bereich von etwa 2 bis 50 µm, insbesondere etwa 4 bis 15 µm liegt. Vorteilhaft ist ausserdem, bei einem Giesserüberdruck von etwa 0,01 bis 0,7 bar, vorzugsweise 0,05 bis 0,3 bar zu arbeiten.

Besonders geeignete Vorrichtungen zur Herstellung cholesterischer Schichten sind Beschichtungsmaschinen mit Messergiesser-Auftragswerk mit denen sich ein cholesterisches Gemisch auf eine Trägerfolie die über eine mit sehr hoher Rundlaufgenauigkeit laufende Walze geführt wird, aufbringen lässt. Vorteilhafterweise ist das Giessmesser auf einen Präzisionsschlitten montiert, so dass sich ein definierter Spalt gegen die Trägerfolie genau einstellen lässt.

Die aufgetragene Schicht wird durch eine Trockenvorrichtung, beispielsweise durch einen Umlufttrockner, getrocknet und anschliessend, oder anstelle des Trocknens, thermisch, durch UV-Strahlen oder durch Elektronenstrahlen polymerisiert bzw. vernetzt, wobei die Härtung durch UV-Strahlung oder durch Elektronenstrahlen bevorzugt ist.

Die aufgetragene Schicht wird vorzugsweise bis zu einem Restgehalt an flüchtigen Verdünnungsmitteln von weniger als 1 Gew.-%, bezogen auf das Trockengewicht der aufgebrachten Schicht, getrocknet. Die Trocknung erfolgt vorzugsweise bei einer Temperatur im Bereich von 20 bis 100°C über einen Zeitraum von etwa 1 bis 120 Sekunden. Die optimalen Trocknungsbedingungen können dabei an die jeweils verwendete Schichtdicke und Beschichtungsgeschwindigkeit angepasst werden. Auf diese Weise erhält man z.B. gehärtete cholesterische Schichten mit einer mittleren Trockenschichtdicke von 0,2 bis 1 µm. Die Mindesttrockendicke entspricht der Pitchhöhe, das heisst dem Verhältnis von Reflexions-Wellenlänge zu Brechungsindex.

Die erfindungsgemäss hergestellten cholesterischen Schichten weisen eine mittlere Schichtdickenschwankung von 50 nm oder darunter, wie z.B. weniger als 40, 30, 20 oder 10 nm, auf, was eine hohe Farbkonstanz der cholesterischen Schicht zur Folge hat. Die mittlere Schichtdickenschwankung kann in einfacher Weise, wie z.B. mikroskopisch anhand von Dünnschnitten bestimmt werden. Eine geeignete Bestimmungsmethode kann beispielsweise in Anlehnung an die in der EP-A-0 566 100 beschriebene Methodik durchgeführt werden.

Als Bindemittel für die Releaseschicht sowie für die cholesterischen Schichten sind auch monomere Mittel und deren Mischungen mit polymeren Bindemitteln einsetzbar. Als monomere Mittel kommen bevorzugt solche in Betracht, die zwei oder mehr vernetzungsfähige Gruppen wie Acryl-, Methacryl-, α-Chloracryl-, Vinyl-, Vinylether-, Epoxid-, Cyanat-, Isocyanat- oder Isothiocyanatgruppen enthalten. Besonders bevorzugt sind Acryl-, Methacryl- oder Vinylethergruppen. Monomere Mittel mit zwei vernetzungsfähigen Gruppen sind beispielsweise die Diacrylate, die Divinylether oder die Dimethacrylate von Diolen wie beispielsweise Propandiol, Butandiol, Hexandiol, Ethylenglykol, Diethylenglykol, Triethylenglykol oder Tetrapropylenglykol.

Monomere Mittel mit drei vernetzungsfähigen Gruppen sind beispielsweise die Triacrylate, die Trivinylether oder die Trimethacrylate von Triolen wie beispielsweise Trimethylolpropan, ethoxyliertem Trimethylolpropan mit 1 bis 20 Ethylenoxideinheiten, propoxyliertem Trimethylolpropan mit 1 bis 20 Propylenoxideinheiten, gemischt ethoxyliertem und propoxyliertem Trimethylolpropan, bei dem die Summe aus Ethylenoxideinheiten und Propylenoxideinheiten 1 bis 20 beträgt. Monomere Mittel mit drei vernetzungsfähigen Gruppen sind beispielsweise auch die Triacrylate, die Trivinylethe'r oder die Trimethacrylate von Glycerin, ethoxyliertem Glycerin mit 1 bis 20 Ethylenoxideinheiten, propoxyliertem Glycerin mit 1 bis 20 Propylenoxideinheiten, gemischt ethoxyliertem und propoxyliertem Glycerin, bei dem die Summe aus Ethylenoxideinheiten und Propylenoxideinheiten 1 bis 20 beträgt.

Monomere Mittel mit vier vernetzungsfähigen Gruppen sind beispielsweise die Tetraacrylate, die Tetravinylether oder die Tetramethacrylate von Tetraolen wie beispielsweise Bis-trimethylolpropan, ethoxyliertem Bis-trimethylolpropan mit 1 bis 20 Ethylenoxideinheiten, propoxyliertem Bis-trimethylolpropan mit 1 bis 20 Propylenoxideinheiten, gemischt ethoxyliertem und propoxyliertem Bis-trimethylolpropan, bei dem die Summe aus Ethylenoxideinheiten und Propylenoxideinheiten 1 bis 20 beträgt. Monomere Mittel mit vier vernetzungsfähigen Gruppen sind beispielsweise auch die Tetraacrylate, die Tetravinylether oder die Tetramethacrylate von Tetraolen wie beispielsweise Pentaerythrit, ethoxyliertem Pentaerythrit mit 1 bis 20 Ethylenoxideinheiten, propoxyliertem Pentaerythrit mit 1 bis 20 Propylenoxideinheiten, gemischt ethoxyliertem und propoxyliertem Pentaerythrit, bei dem die Summe aus Ethylenoxideinheiten und Propylenoxideinheiten 1 bis 20 beträgt.

Zur Erhöhung der Reaktivität bei der Vernetzung oder Polymerisation an Luft können die Bindemittel und die monomeren Mittel 0,1 bis 10% eines primären oder sekundären Amins enthalten. Beispiele für geeignete Amine sind Ethanolamin, Diethanolamin oder Dibutylamin.

Die Herstellung der pigmenthaltigen Zusammensetzungen kann nach den üblichen, in der Fachwelt bekannten Dispergierverfahren und unter Verwendung von Verdünnungsmitteln, Dispergiermitteln, Photoinitiatoren und gegebenenfalls weiteren Additiven erfolgen.

Als Verdünnungsmittel können Wasser oder organische Flüssigkeiten oder deren Mischungen verwendet werden, wobei organische Flüssigkeiten bevorzugt sind. Besonders bevorzugt sind organische Flüssigkeiten mit einem Siedepunkt unterhalb von 140°C, insbesondere Ether, wie Tetrahydrofuran, Ketone, wie Ethylmethylketon und Ester, wie Butylacetat.

Als Dispergiermittel können niedermolekulare Dispergiermittel, wie beispielsweise Stearinsäure oder auch polymere Dispergiermittel verwendet werden. Geeignete polymere Dispergiermittel oder Dispergierharze sind dem Fachmann bekannt. Insbesondere sind zu nennen sulfonatgruppen-, phosphatgruppen-, phosphonatgruppenoder carboxylgruppenhaltige Polyurethane, carboxylgruppenhaltige Vinylchloridcopolymere, Polyiminpolyester oder Polyetheracrylate mit oder ohne eingebaute funktionelle Gruppen.

Für die Herstellung von vernetzbaren oder polymerisierbaren pigmenthaltigen Zusammensetzungen können für die photochemische Polymerisation handelsübliche Photoinitiatoren verwendet werden, beispielsweise die oben für die photochemische Polymerisation der cholesterischen Gemische aufgeführten Photoinitiatoren.

Die erfindungegemässen Schichtmaterialien und Pigmente können grundsätzlich folgende Schichtenfolge aufweisen:
1) gegebenenfalls einen ersten Träger
2) gegebenenfalls eine Releaseschicht,
3) mindestens eine cholesterische Farbeffektschicht,
4) gegebenenfalls eine transmittierendes Licht teilweise oder vollständig absorbierende Schicht,
5) gegebenenfalls einen zweiten, nachträglich auf die Cholesterschicht, z.B. durch Kaschieren, aufgetragenen Träger.

Als Träger dienen vorzugsweise bekannte, vorzugsweise thermoplastische, Filme aus Polyestern, wie Polyethylenterephthalat oder Polyethylennaphthalat sowie Polyolefinen, Cellulosetriacetat, Polycarbonaten, Polyamiden, Polyimiden, Polyamidoimiden, Polysulfonen, Aramiden oder aromatischen Polyamiden. Die Dicke der Träger beträgt vorzugsweise etwa 5 bis 100 µm, insbesondere etwa 10 bis 20 µm. Der Träger kann vor der Beschichtung einer Koronaentladungsbehandlung, einer Plasmabehandlung, einer leichten Adhäsionsbehandlung, einer Wärmebehandlung, einer Staubentfernungsbehandlung oder ähnlichem unterworfen werden. Der Träger weist vorzugsweise eine mittlere Mittellinien-Oberflächenrauhigkeit von 0,03 µm oder weniger, insbesondere von 0,02 µm oder weniger, besonders bevorzugt von 0,01 µm oder weniger auf. Das Rauhigkeitsprofil der Oberfläche des Trägers kann durch Füllstoffe, die dem Schichtträger bei dessen Herstellung zugesetzt werden, variiert werden. Beispiele für geeignete Füllstoffe sind Oxide und Carbonate von Ca, Si und Ti sowie organische feine Pulver von Acrylsubstanzen.

Der Träger kann auch eine metallisierte Folie oder ein vorzugsweise poliertes Metallband sein, das beispielsweise auch als Endlosband ausgebildet sein kann.

Das Verfahren zur Herstellung eines erfindungsgemässen cholesterischen Schichtmaterials wird vorzugsweise wie folgt durchgeführt.
a) In einem ersten Schritt wird eine Releaseschicht auf einen Schichtträger mittels einer der oben genannten Giessvorrichtungen aufgetragen, getrocknet und gehärtet. Die Schichtdicke dieser Releaseschicht beträgt etwa 0,5 bis 20 µm, insbesondere etwa 0,5 bis 10 µm, besonders bevorzugt etwa 0,5 bis 3 µm. Die Releaseschicht kann eine cholesterische Schicht sein oder eine bindemittelhaltige Schicht mit einem Bindemittel, das mit bekannten Methoden gehärtet bzw. vernetzt wird. Das giessfähige Gemisch für die Releaseschicht weist vorzugsweise eine Viskosität im Bereich von etwa 1 bis 500 mPas auf, insbesondere etwa 10 bis 100 mPas, gemessen bei 23°C. Besonders bevorzugt bringt man das Gemisch mit einer Geschwindigkeit von etwa 1 bis 800 Meter pro Minute, insbesondere etwa 5 bis 100 Meter pro Minute auf den Schichtträger. Die Härtung bzw. Vernetzung geschieht vorzugsweise durch Eletronenstrahl- oder UV-Bestrahlung.
   Die Haftung der Releaseschicht auf dem Träger beträgt mindestens 1 cN, vorzugsweise mindestens 3 cN und besonders bevorzugt mindestens 10 cN, was durch die Einstellung der Temperatur und der Bestrahlungsintensität bei der Vernetzung einstellbar ist. Bei UV-Härtung beträgt die Temperatur der zu härtenden Schicht mindestens 80°C, vorzugsweise mindestens 90°C, die Dauer'der Bestrahlung liegt im Bereich von 5 bis 500 ms, bei einer Strahlerleistung von etwa 50 bis 200 Watt/cm.
   Die Einstellung einer hohen Haftkraft ist mit zwei Vorteilen verbunden:
   - Es findet keine störende Diffusion von Bestandteilen des Trägers oder der Releaseschicht in die darüberliegenden cholesterischen Schichten statt;
   - nach dem Ablösen der cholesterischen Schichten von der auf dem Träger verbleibenden Releaseschicht ist dieser für weitere Beschichtungsvorgänge verwendbar.
b) Anschliessend wird eine erste cholesterische Schicht mit dem gewünschten Cholester oder -gemisch auf die Releaseschicht aufgebracht, getrocknet und gehärtet. Die für die Herstellung der Cholesterschicht verwendete Beschichtungsmasse besitzt vorzugsweise eine vergleichbare oder identische Zusammensetzung wie die Beschichtungsmasse für die Releaseschicht. Die Trockenschichtdicke dieser Schicht liegt z.B. im Bereich von etwa 0,2 bis 1 µm, die Mindestschichtdicke entspricht der Pitchhöhe.
c) In einem nächsten Schritt wird gegebenenfalls eine zweite cholesterische Schicht auf die erste cholesterische Schicht aufgebracht, wobei die Schichtdicke wie bei b) bemessen ist, dann wird wie bei b) getrocknet und gehärtet. Der Giessvorgang erfolgt bevorzugt analog zur Herstellung von b). Auf diese Weise kann eine beliebig grosse Anzahl weiterer cholesterischer Schichten analog aufgetragen werden.
   Die Trocknungsbedingungen für die Trocknung der Releaseschichten sind unkritisch, da hohe Interferenzlinienhomogenität für diese Schichten nicht von Bedeutung sind. Die Trocknungsbedingungen für die cholesterischen Schichten werden dagegen so eingestellt, dass optimale Interferenzlinienhomogenität erreicht wird.
   Die Härtung bzw. Vernetzung der cholesterischen Schichten wird vorzugsweise unter den gleichen Bedingungen wie bei der Releaseschicht durchgeführt. Dabei resultiert für die Haftung jeder der cholesterischen Schichten auf der jeweils unteren Schicht, also z.B. der Releaseschicht oder einer anderen cholesterischen Schicht, ein Wert, welcher im Bereich von kleiner als 1 cN, bevorzugt im Bereich von 0,1 bis 0,8 cN liegt. Dadurch sind die cholesterischen Schichten überraschend problemlos von der Releaseschicht und gegebenenfalls voneinander separierbar. Durch Variation von Bestrahlungsintensität und/oder Temperatur kann die Haftung der cholesterischen Schichten untereinander bedarfsgerecht eingestellt werden'.
d) Anschliessend können die cholesterischen Schichten von der geträgerten Trägerschicht abgelöst und weiter verarbeitet werden.

Das Ablösen der cholesterischen Mehrschichtstruktur von der ersten Releaseschicht kann z.B. dadurch erfolgen, dass der Verbund über eine Umlenkrolle mit kleinem Durchmesser geführt wird. In Folge dessen blättert das vernetzte cholesterische Material von der Releaseschicht ab. Weitere bekannte Methoden sind gleichfalls geeignet, z.B. das Abziehen des Schichtträgers über eine scharfe Kante, mittels Airknife (Luftrakel), Anritzen des Schichtpakets und nachfolgendes Abblasen mittels Druckluft, Wasser- oder Dampfstrahl, Ultraschall,mechanisches Entfernen, wie z.B. Abrakeln, oder Kombinationen davon.

Das nun trägerlose cholesterische Mehrschichtmaterial kann gegebenenfalls durch Zerkleinerung auf die gewünschte Korngrösse zu einem Mehrschichtpigment verarbeitet werden. Dies kann beispielsweise durch Mahlen in Universalmühlen erfolgen. Die zerkleinerten Pigmente können anschliessend zur Einengung der Korngrössenverteilung, beispielsweise durch einen Siebprozess klassiert werden.

Die Erfindung wird nun unter Bezugnahme auf beiliegenden Figuren näher erläutert. Dabei zeigt
Figur 1 die TEM-Aufnahme einer cholesterischen Einzelschicht (d = 4,8 µm) mit stark inhomogenem Interferenzlinienmuster;
Figur 2 die TEM-Aufnahme einer cholesterischen Doppelschicht (d = 2 x 2,4 µm) mit leicht inhomogenem Interferenzlinienmuster, C1 = 1.cholesterische Schicht, C2 = 2.cholesterische Schicht, G = Grenzfläche;
Figur 3 die TEM-Aufnahme eines handelsüblichen Pigments mit deutlich sichtbaren Interferenzlinieninversionen und Augenbildungen;
Figur 4 die TEM-Aufnahme einer erfindungsgemässen Einzelschicht (d = 0,9 µm) mit homogenem Interferenzlinienmuster (ein geringfügiger senkrechter Versatz, der die Brillanz jedoch nicht wesentlich beeinträchtigt, ist am oberen Ende der Schicht erkennbar);
Figur 5 die TEM-Aufnahme einer erfindungsgemässen Mehrschichtstruktur (8 Schichten zu je 0,9 µm Dicke) mit homogenem Interferenzlinienmuster.

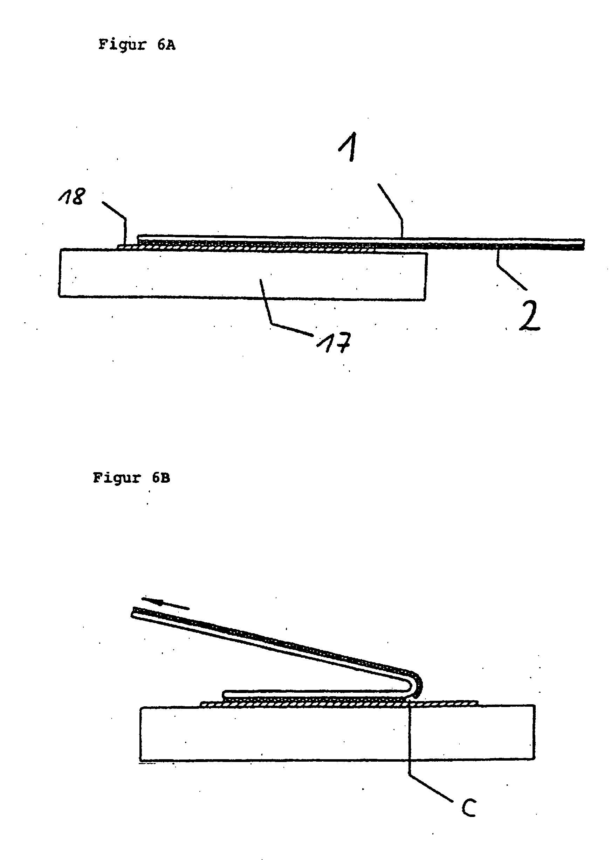

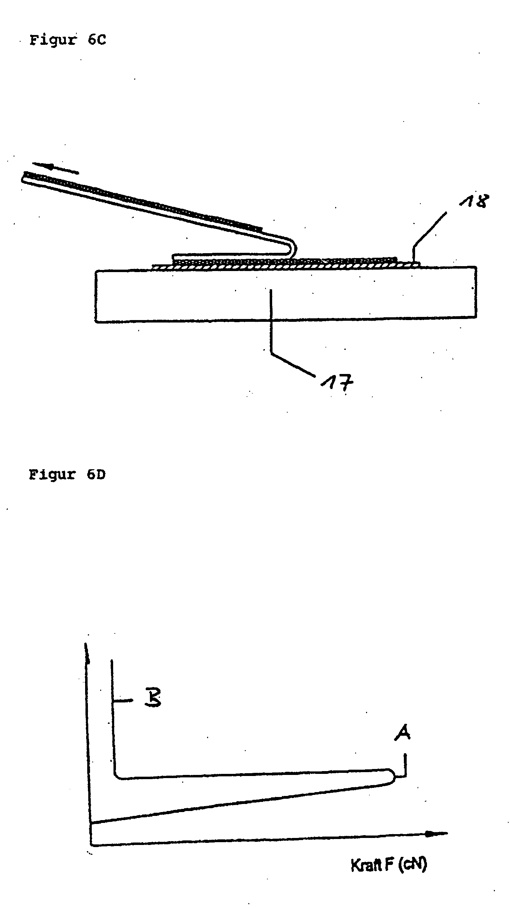

Figur 6 die Messung der Haftkraft. Auf einer ebenen Metallplatte 17 wird ein etwa 5 cm langes Stück Klebeband 18 fixiert. Als Klebeband 18 kann jedes handelsübliche Klebeband verwendet werden, das mit einer PET-Referenzfolie eine Haftkraft unter ansonst gleichen Messbedingungen von etwa 7,3 bis 7,9 cN, insbesondere etwa 7,6 cN, ergibt. Als PET-Referenzfolie dient hier eine PET-Folie, Typ E2R, der Firma Teijin, Dicke 9 µm, Breite 6,35 mm, Oberflächenrauhigkeit nach DIN 4768: Rz = 0,86 µm, nach DIN 4768/1: Ra = 0,012 µm, nach EP-B-0 032 710 (Interferenzkontrastverfahren): 75 bis 125 nm. Die Klebeschicht ist nach oben gerichtet und von der Platte abgewandt. Der zu messende Verbund, bestehend aus dem Schichtträger 1 und der Cholesterschicht 2 wird so aufgebracht, dass eine Cholesterschicht 2 mit der Klebeschicht des Klebebands 18 in Kontakt kommt, wie in Figur 6A dargestellt. Das freie Ende des Verbundes wird nun so abgebogen, dass es einen Winkel von 160° mit der Ebene der Metallplatte 17 bildet. Mit einer konstanten Geschwindigkeit von 0,1 mm pro Sekunde wird das freie gegen das aufgeklebte Bandende in Pfeilrichtung gezogen, wobei die Zugkraft im Band ständig zunimmt, bis der Schichtverbund an der Stelle C (Figur 6B) aufreisst. In der Figur 6D ist der Kraftverlauf dargestellt und der Punkt A ist der Abrisspeak des Schichtverbundes. Im weiteren Verlauf der Messung wird die Haftfestigkeit der Cholesterschicht 2 zum Träger 1 gemessen, wie in Figur 6C dargestellt. Im Kraftdiagramm Figur 6D bedeutet der Punkt B die Haftfestigkeit der Cholesterschicnt auf dem Träger.

Die Zugspannungen im Schichtverbund werden mit einem hochauflösenden Sensor erfasst und als Abzugskraft in cN mit einem y-T-Schreiber registriert.

### Allgemeine Methoden:

### a) Bestimmung der Interferenzhomogenität:

Ein Materialstück einer beschichteten Probe wird ausgeschnitten und 12 Stunden bei etwa 160°C in ein 4-Komponentenharz eingebettet, bestehend aus AGAR 100(Epoxidharz), DDSA (Dodecenylsuccinanhydrid), MNA (Methylnadicanhydrid) und BDMA (Benzyldimethylamin). Die fixierte Probe wird dann in einen Halter eingespannt, angeschnitten und mit einem Diamantmesser auf einem handelsüblichen Mikrotom bei einer Schnittgeschwindkeit von 1 mm/s mit einer Schnittdicke von 100 nm geschnitten. Die Schnitte werden auf destilliertem Wasser aufgefangen, mit Chloroform gestreckt, in einer Schlitzblende abgefangen und in einem handelsüblichen Transmissions-Elektronenmikroskop (TEM) mit einer Digitalkamera bei 20 000-facher Vergrösserung aufgenommen. Die dunklen Zonen des Interferenzmusters sind Zonen höherer Elektronenabsorption an Stellen, wo der Elekronenstrahl in der Längsachse der stäbchenförmigen Moleküle verläuft. Die Pitchhöhe entspricht dem 2,5-fachen zweier aufeinanderfolgender Interferenzmuster.

### b) Bestimmung der Farbshift-Stabilität der erfindungsgemässen Schichtmaterialien:

Ein Materialstück einer beschichteten Probe, z.B. bestehend aus Schichtträger, Releaseschicht und der oder den darauf beschichteten cholesterischen Schichten wird 15 Minuten in einem auf 80°C erwärmten Xylolbad behandelt und anschliessend getrocknet, was beispielsweise bei ungefähr 80°C während einer Stunde geschehen kann; danach wird das Reflexionsmaximum der so behandelten Probe im Vergleich zu einer unbehandelten Probe mit bekannten optischen Methoden bestimmt und der Farbshift daraus berechnet. Es wurde gefunden, dass dann, wenn dieser so gemessene Farbshift höchstens etwa 5 bis 10 nm, vorzugsweise wniger als 3 nm, beträgt, eine ausreichende Lösungsmittel- oder Temperaturstabilität des erfindungsgemässen cholesterischen Schichten gegeben ist. Insbesondere wurde unter diesen Bedingungen in einer üblichen Lackzusammensetzung mit einem erfindungsgemässen cholesterischen Pigment kein visuell erkennbarer Farbunterschied zwischen 80°C und 130°C Applikationstemperatur festgestellt.

### Beispiel 1: Herstellung von cholesterischem Einzelschichtmaterial mit inhomogenem Interferenzlinienmuster

100 g einer nematischen Verbindung der Formel (H) wurden mit 4,52 g einer chiralen Verbindung der Formel (B), 104,5 g Tetrahydrofuran, 5 g einer 1%igen Lösung eines Verlaufsmittels (BYK 363 der Fa. Byk) in Tetrahydrofuran und 2 g Photoinitiator Irgacure 184 (Ciba-Geigy) zu einer klaren Lösung gerührt.

Das Gemisch wurde mit einer Giessvorrichtung gemäss DE 1973836.9 (Messergiesser) bei einem Giesserüberdruck von 0,2 bar auf einen 14 µm dicken PET-Schichtträger mit einer Trockendicke von 4,8 µm beschichtet. Die Verweilzeit in der auf 85°C erhitzten Trockenzone betrug 24 s, danach wurde das beschichtete Material mittels UV-Bestrahlung bei einer Lampenleistung von 120 W/cm bei einer Temperatur von 60°C bei einer Einwirkzeit von 120 ms unter Stickstoffatmosphäre vernetzt.

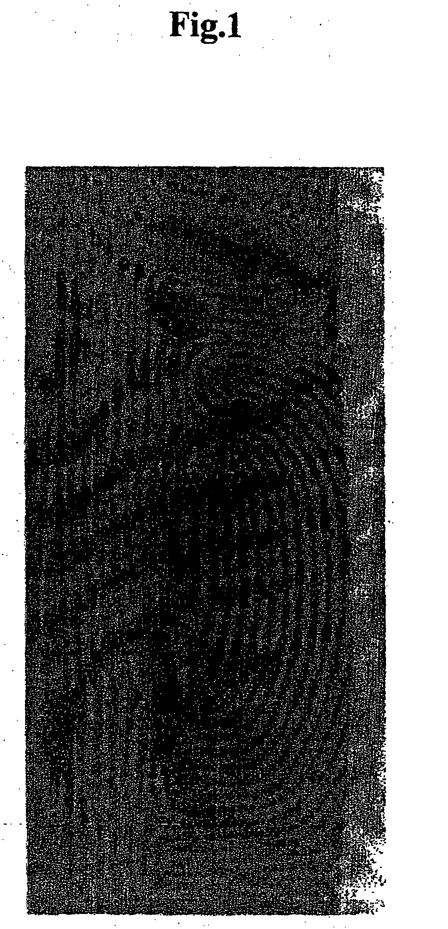

Die so erhaltene Schicht zeigt auf einer schwarzen Unterlage einen grünen Farbton mit starker Winkelabhängigkeit zu blau, der Farbeindruck wird durch eine Wolkigkeit, d.h. durch eine in Draufsicht zu beobachtende Schlierenbildung gestört. Eine Probe der so erhaltenen Effektschicht wurde, wie oben beschrieben, auf Interferenzlinienhomogenität untersucht. Figur 1 zeigt die entsprechende TEM-Aufnahme.

### Beispiel 2: Herstellung von cholesterischem Mehrschichtmaterial mit inhomogenem Interferenzlinienmuster

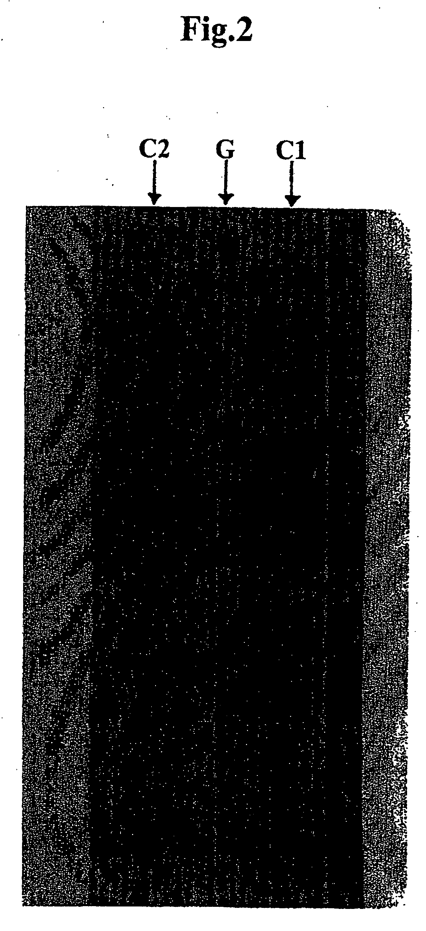

Es wurde verfahren wie in Beispiel 1, jedoch betrug die Trockenschichtdicke 2,4 µm. Auf diese Schicht wurde eine zweite Schicht gleicher Dicke und unter gleichen Bedingungen aufgetragen. Bei der Untersuchung der Interferenzlinien wurde an der Grenzlinie zwischen erster und zweiter Schicht eine signifikante Störung beobachtet (Figur 2).

Die Haftfestigkeit der 1. Schicht auf dem Träger betrug 0,7 cN, die der 2. Schicht auf der 1. Schicht betrug 2,3 cN.

### Beispiel 3: Untersuchung eines handelsüblichen cholesterischen Effektpigments auf Interferenzlinienhomogenität

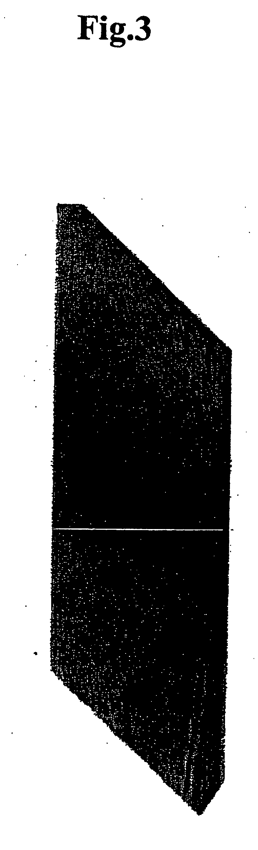

Ein handelsübliches cholesterisches Effektpigment (LC-Pigment-Grün; Fa. Wacker) wurde wie oben beschrieben fixiert und elektronenmikroskopisch untersucht. Eine TEM-Aufnahme davon zeigt Figur 3. Die Interferenzlinieninhomogenität (Augenbildung, Inversionen) ist über die gesamte Schichtdicke deutlich zu erkennen.

### Beispiel 4: Herstellung einer cholesterischen Einzelschicht mit homogenem Interferenzlinienmuster

Es wurde verfahren wie in Beispiel 2, jedoch betrug die Trockenschichtdicke der zweiten Schicht 0,9 µm und die Vernetzungstemperatur für beide Schichten 100°C.

Die Haftfestigkeit der 1. Schicht auf dem Träger betrug > 8 cN, die der 2. Schicht auf der ersten 0,8 cN.

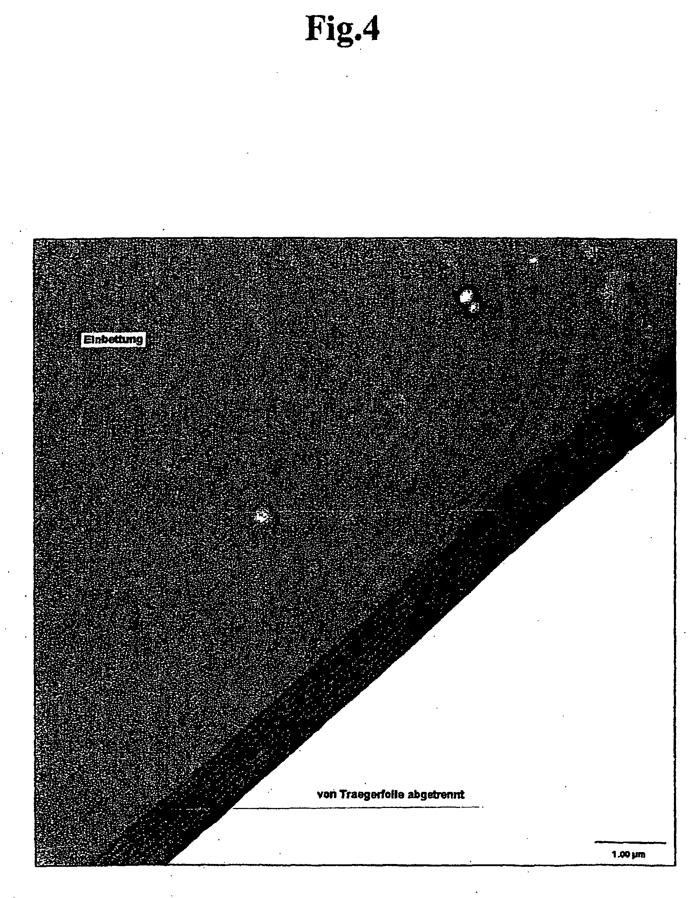

Die 2. Schicht wurde nach Anritzen des Schichtverbundes von der 1. Schicht abgelöst, wie oben beschrieben fixiert und mikroskopisch untersucht. Figur 4 zeigt eine entsprechende TEM-Aufnahme. Die Cholesterschicht zeigt überraschenderweise keinerlei Inhomogenitäten im Interferenzlinienmuster.

### Beispiel 5: Herstellung eines cholesterischen Mehrschichtverbundes mit homogenem Interferenzlinienmuster

Es wurde verfahren wie in Beispiel 1, jedoch betrug die Trockenschichtdicke 0,9 µm und die Vernetzungstemperatur war 100°C. Die Beschichtung wurde identisch noch siebenmal wiederholt, so dass sich auf dem Schichtträger ein Verbund von 8 Schichten mit einer Gesamt-Trockendicke von 7,2 µm befand.

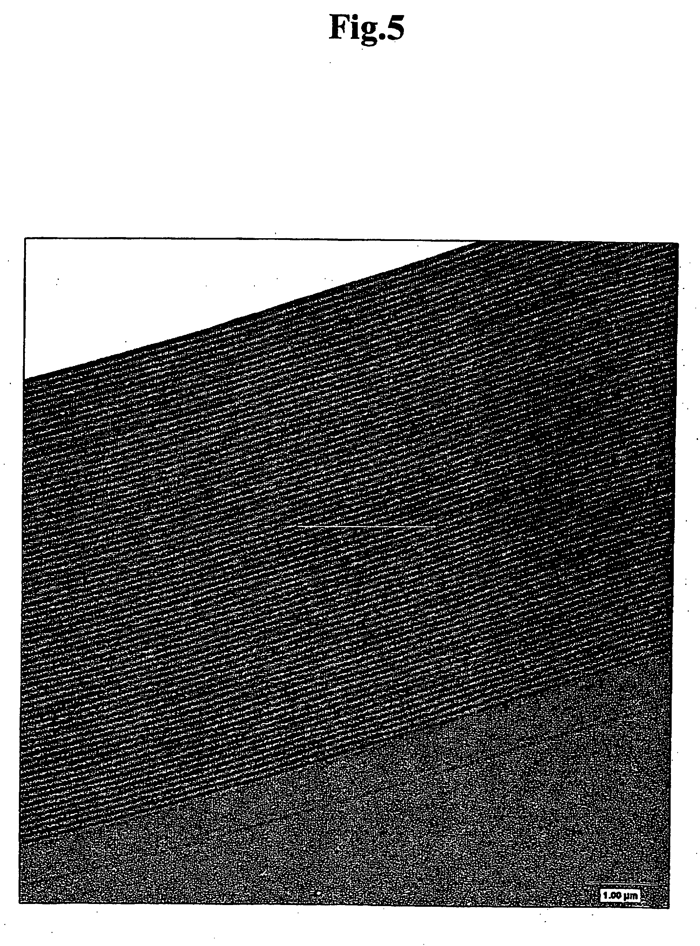

TEM-Dünnschnitte zeigten über den gesamten Schichtverbund eine völlig ungestörte Ausbildung der Interferenzlinien (Figur 5). Die Haftfestigkeit der 1. Schicht auf dem Träger betrug mehr als 8 cN, die aller darauffolgenden Schichten auf der jeweils nächstunteren weniger als 1 cN.

### Beispiel 6: Herstellung cholesterischer Effektpigmente hoher Farbbrillanz

Der Schichtverbund aus Beispiel 5 wurde mittels Luftmesser vom Träger abgetrennt, wobei die 1. Schicht auf dem Träger verblieb. Die abgelösten Flocken wurden auf eine Teilchengrösse von 15 µm vermahlen. Während des Mahlvorgangs delaminierte der Mehrschichtverbund zu Einzelschicht-Pigmentflocken. Diese wurden in eine Spritzrezeptur, bestehend aus einem mit Melamin vernetzten Celluloseacetobutyrat (CAB) -Einbrennlack eingearbeitet (Pigmentkonzentration 4 Gew.-%; Feststoffgehalt 20 Gew.-%; Lösemittelgemisch bestehend aus Butylacetat, Butylacetat und Xylol im Verhältnis 6:3:3. Diese Mischung wurde auf ein schwarzes Blech mit einer Trockendicke von 25 µm gespritzt. Das Blech zeigte einen brillanten grünen Farbton mit einer starken Winkel-abhängigkeit zu blau.

Anschliessend wurde je ein Blech 30 min bei einer Einbrenntemperatur von 80, 130 bzw. 160°C behandelt. Bei einer anschliessenden Messung der 3 Proben in einem üblichen Spektrometer konnte keinerlei Änderung der Reflexionswellenlänge (λₘₐₓ) festgestellt werden.

### Beispiel 7: Herstellung eines Breitbandpolarisators

Es wurde analog verfahren wie in Beispiel 5, jedoch wurde durch Variation des Verhältnisses von nematischer zu chiraler Verbindung in den einzelnen Schichten ein Schichtverbund mit unterschiedlichen Reflexionswellenlängen hergestellt.

Folgende Rezepturen wurden verwendet:

| Rezeptur-Nr. | Nematische Verb. [g] | Chirale Verb. [g] |
|---|---|---|
| 0 | 93,0 | 7,0 |
| 1 | 96,5 | 3,5 |
| 2 | 96,25 | 3,75 |
| 3 | 96,0 | 4,0 |
| 4 | 95,75 | 4,25 |
| 5 | 95,5 | 4,5 |
| 6 | 95,25 | 4,75 |
| 7 | 95,0 | 5,0 |
| 8 | 94,5 | 5,5 |
| 9 | 94,0 | 6,0 |

Cholester und Nemat wurden in 100 g THF aufgenommen und mit 5 g Byk 361 (1%ig in THF) und 2 g Irgacure 181 versetzt.

Zunächst wurde eine erste Schicht mit der Rezeptur-Nr. 0 analog Beispiel 5, jedoch mit einer Schichtdicke von 1,0 µm auf den Träger aufgetragen. Darauf wurden nacheinander weitere 13 Schichten mit den nachfolgenden Rezepturen jeweils mit 1,3 µm Schichtdicke und mit einer Verweilzeit in der Trockenzone von 9,6 s und einer UV-Bestrahlungszeit von 48 ms beschichtet. Die Temperaturen bei Trocknung und Härtung waren wie in Bsp. 5 gewählt. Die Reflexionsmaxima der Teilschichten zeigt die folgende Tabelle.

| Schicht | Rezeptur-Nr. | Reflexionsmaximum (nm) |
|---|---|---|
| PET- Träger | | |
| 1 | 0 | 352 |
| 2 | 9 | 403 |
| 3 | 8 | 426 |
| 4 | 7 | 464 |
| 5 | 6 | 482 |
| 6 | 5 | 519 |
| 7 | 4 | 546 |
| 8 | 4 | 546 |
| 9 | 3 | 580 |
| 10 | 3 | 580 |
| 11 | 2 | 624 |
| 12 | 2 | 624 |
| 13 | 2 | 624 |
| 14 | 1 | 669 |

Die Haftfestigkeit der 1. Schicht auf dem Träger betrug mehr als 8 cN, die der 2. Schicht auf der 1. Schicht betrug 0,7 cN, die Haftfestigkeiten der Schichten 3 bis 14 auf den jeweils näch-stunteren betrug etwa 1,75 cN.

Bei der Trennung des Schichtverbundes mittels Luftmesser trennte sich der Verbund zwischen erster und zweiter Schicht, sodass die Schichten 2 bis 14 als Ganzes abtrennbar waren. Der abgelöste Schichtverbund zeigte eine metallisch erscheinende Oberfläche; bei einer Transmissionsmessung in einem üblichen Spektrometer wurde eine gleichmässige Reflexion von 40% über einen Wellenlängenbereich von 400 bis 700 nm gemessen. Der Verbund war als hochtransparenter rechtsdrehender Breitbandpolarisator verwendbar.

TEM-Dünnschichtaufnahmen zeigten einen homogenen Verlauf des Interferenzlinienmusters aller 14 Schichten.

### Beispiel 8: Herstellung von cholesterischen Schichten mit hoher Lösungsmittelbeständigkeit und unterschiedlicher Interferenzlinienhomogenität

a) 100 g einer nematischen Verbindung der Formel (H) wurden mit 3,25 g chiraler Verbindung der Formel (B), 103,25 g Tetrahydrofuran, 5 g einer 1%igen Lösung von Byk 361 in Tetrahydrofuran sowie 2 g Irgacure 184 zu einer klaren Lösung verrührt. Dieses Gemisch wurde mittels eines Messergiessers bei einem Giessüberdruck von 0,2 bar auf einen 14 µm dicken PET-Schichtträger mit einer Trockenschichtdicke von 2,5 µm beschichtet. Die Verweilzeit in der auf die Giessvorrichtung folgenden Trockenzone betrug 24 s bei 100°C. Die Giessgeschwindigkeit betrug 10m/min. Die Vernetzung erfolgte mit einer UV-Lampe mit 120 W/cm Leistung unter Stickstoffatmosphäre bei 100°C.
   Die so erhaltene Schicht ergab auf einer schwarzen Unterlage einen tiefroten brillanten Eindruck mit einer starken Winkelabhängigkeit zu schwarz bei Schrägbetrachtung.
b) Es wurde verfahren wie in Abschnitt a), jedoch betrug die Temperatur während der Trocknung 60°C.
c) Es wurde verfahren wie in Abschnitt a), jedoch betrug die Trocknungstemperatur 25°C.

Die Eigenschaften hinsichtlich Interferenzlinienhomogenität und Lösungsmittelbeständigkeit sind in folgender Tabelle zusammengefasst:

| Beispiel | Schichtdicke [µm] | Trocknungs-temperatur [°C] | Interferenzlinienhomogenität | Lösungsmittel-Stabilität¹⁾ |
|---|---|---|---|---|
| 8a | 2,5 | 100 | sehr homogen | Δ λₘₐₓ = 0 |
| 8b | 2,5 | 60 | homogen, vereinzelter leichter vertikaler Versatz | Δ λₘₐₓ = 0 |
| 8c | 2,5 | 25 | starke Störungen | Δ λₘₐₓ = 0 |

| | | | | |
|---|---|---|---|---|
| ¹⁾ Veränderung des Reflexionsmaximums nach Xylolbehandlung (15 min/80°C) | | | | |

## Patentansprüche

1. Cholesterisches Schichtmaterial, umfassend wenigstens eine dreidimensional vernetzte, orientierte cholesterische Schicht, **dadurch gekennzeichnet, dass** die vernetzte(n) cholesterische(n) Schicht(en) im Wesentlichen über die gesamte Schichtdicke ein homogenes Interferenzlinienmuster aufweist (aufweisen), wobei das Interferenzlinienmuster keine Linieninversion und/oder keine Augenbildung zeigt.

2. Cholesterisches Schichtmaterial nach Anspruch 1, **dadurch gekennzeichnet, dass** die Interferenzlinien im wesentlichen parallel zur Schichtoberfläche verlaufen und jede cholesterische Schicht eine in Wesentlichen glatte Oberfläche besitzt.

3. Cholesterisches Schichtmaterial nach einem der vorherigen Ansprüche, **dadurch gekennzeichnet, dass** die cholesterische Schicht eine mittlere Trockenschichtdicke von weniger als etwa 5 µm, insbesondere weniger als etwa 2 µm, vorzugsweise kleiner oder gleich etwa 1 µm, aufweist.

4. Cholesterisches Schichtmaterial nach einem der vorherigen Ansprüche, **dadurch gekennzeichnet, dass** die cholesterische Schicht eine mittlere Trockenschichtdicke von mindestens einer Pitch-Höhe aufweist.

5. Cholesterisches Schichtmaterial nach einem der vorherigen Ansprüche, **dadurch gekennzeichnet, dass** es mehrere cholesterische Schichten gleicher oder verschiedener Dicke und gleicher oder verschiedener chemischer Zusammensetzung umfasst, welche jeweils im Wesentlichen über die gesamte Schichtdicke ein homogenes Interferenzlinienmuster, aufweisen.

6. Cholesterisches Schichtmaterial, nach einem der vorhergehenden Ansprüche, **dadurch gekennzeichnet, dass** die vernetzte(n) cholesterische(n) Schicht(en) bei Temperaturänderung und/oder Einwirkung von Verdünnungsmitteln keinen visuell erkennbaren Farbshift zeigt (zeigen).

7. Cholesterisches Schichtmaterial nach Anspruch 6, **dadurch gekennzeichnet, dass** das Reflexionsmaximum der cholesterischen Schicht(en) nach 15 minütiger Behandlung bei 80°C in Xylol und anschliessendem Trocknen keinen visuell erkennbaren Farbshift zeigt (zeigen).

8. Cholesterisches Pigment, umfassend wenigstens eine vernetzte orientierte cholesterische Schicht mit einer mittleren Teilchengrösse im Bereich von 5 bis 50 µm und eine Dicke von 0,2 bis 5 µm, **dadurch gekennzeichnet, dass** die vernetzte(n) cholesterische(n) Schicht(en) die in einem der vorherigen Ansprüche angegebenen Eigenschaften besitzt (besitzen).

9. Verfahren zur Herstellung eines cholesterischen Schichtmaterials nach Anspruch 1, **gekennzeichnet durch**:
a) Aufgiessen einer cholesterischen Beschichtungsmasse, die wenigstens eine vernetzbare Substanz unfasst, auf einen Träger unter Ausbildung einer ersten cholesterischen Schicht und Orientieren der Schicht, wobei der Träger im Wesentlichen chemisch inert gegenüber der aufzutragenden cholesterischen Schicht ist;
b) Trocknung und Vernetzen der Schicht, wobei die Bedingungen so gewählt sind, dass die erhaltene Schicht im Wesentlichen über die gesamte Schichtdicke ein homogenes Interferenzlinienmuster aufweist;
c) Entfernen des Schichtmaterials vom Träger, nachdem gegebenenfalls eine oder mehrere weitere orientierte, cholesterische Schichten auf die gemäss Schritt a) erhaltenen Schicht aufgetragen wurden.

10. Verfahren nach Anspruch 9, **dadurch gekennzeichnet, dass** ein Träger eingesetzt wird, der die Orientierung der darauf aufgegossenen cholesterischen Schicht während der Trocknung und Härtung nicht stört.

11. Verfahren nach einem der Ansprüche 9 und 10, **dadurch gekennzeichnet, dass** der Träger gegenüber der auf ihn aufgegossenen, getrockneten und vernetzten ersten cholesterischen Schicht eine Haftkraft von weniger als etwa 1 cN besitzt.

12. Verfahren nach einem der Ansprüche 9 bis 11, **dadurch gekennzeichnet, dass** der Träger ausgewählt ist unter einem Kunststoff-, Metall-, Glas- oder Keramikträger.

13. Verfahren nach Anspruch 12, **dadurch gekennzeichnet, dass** der Kunststoffträger eine Releaseschicht aus vernetztem, vorzugsweise orientiertem, cholesterischem Material umfasst, auf welche die erste cholesterische Schicht aufgegossen wird.

14. Verfahren nach Anspruch 13, **dadurch gekennzeichnet, dass** die Haftkraft zwischen Kunststoffträger und Releaseschicht mindestens etwa zweifach grösser ist als die Haftkraft zwischen Releaseschicht und erster cholesterischer Schicht.

15. Verfahren nach einem der Ansprüche 9 bis 14, **dadurch gekennzeichnet, dass** die Beschichtungsmassen für die cholesterische(n) Schicht(en) eine Viskosität im Bereich von etwa 1 bis 50 mPas besitzen und die Auftragsgeschwindigkeit im Bereich von etwa 1 bis 800 m/min liegt.

16. Verfahren nach einem der Ansprüche 9 bis 15, **dadurch gekennzeichnet, dass** die Vernetzung der cholesterischen Schicht(en) und der gegebenfalls vorliegenden cholesterischen Releaseschicht durch Elektronenstrahlen oder UV-Strahlung bei gleichzeitigem Erwärmen der zu härtenden Schicht erfolgt, wobei die Strahlerleistung bei etwa 50 bis 200 Watt/cm, insbesondere etwa 100 bis 140 Watt/cm, bei einer Bestrahlungsdauer von etwa 2 bis 5000 msec, insbesondere etwa 30 bis 200 msec, liegt.

17. Verfahren nach Anspruch 16, **dadurch gekennzeichnet, dass** die Schichttemperatur während der Strahlungshärtung mindestens etwa 60°C, insbesondere mindestens etwa 80°C, vorzugsweise mindestens etwa 90°C, beträgt.

18. Verfahren nach einem der Ansprüche 9 bis 17, **dadurch gekennzeichnet, dass** man auf die zuletzt aufgetragene cholesterische Schicht eine weitere Trägerfolie aufbringt und die eine oder mehreren cholesterischen Schichten im Verbund vom Träger entfernt.

19. Verfahren nach einem der Ansprüche 9 bis 17, **dadurch gekennzeichnet, dass** man eine oder mehreren cholesterischen Schichten vom Träger durch Abblasen mit Druckluft, Wasserstrahl oder Wasserdampf entfernt und zu Pigmenten vermahlt.

20. Zusammensetzung, enthaltend wenigstens ein cholesterisches Pigment nach Anspruch 8.

21. Verwendung von Pigmenten nach Anspruch 8 im Fahrzeug- oder Fahrzeugzubehörsektor, im EDV-, Freizeit-, Sport- und Spielsektor, in optischen Bauelementen, wie Polarisatoren oder Filter, im Kosmetikbereich, im Textil-, Leder- oder Schmuckbereich, bei Geschenkartikeln, bei Schreibutensilien, oder auf Brillengestellen, im Bausektor, im Haushaltssektor, bei Druckerzeugnissen aller Art, bei der Herstellung von Lacken oder Farben, zur fälschungserschwerenden Bearbeitung von Gegenständen.

22. Verwendung einer Zusammensetzung nach Anspruch 20 zur Bei schichtung von Gebrauchsgegenständen oder zur Lackierung von Fahrzeugen.

23. Polarisator, umfassend ein Schichtmaterial nach einem der Ansprüche 1 bis 7, gegebenenfalls aufgetragen auf eine Trägerfolie.

24. Breitbandpolarisator, umfassend ein Schichtmaterial nach einem der Ansprüche 1 bis 7 mit einer Anzahl von 3 bis 20 cholesterischer Schichten mit aufeinander abgestimmten Reflexionsmaxima, wobei der Polarisator eine Gesamtdicke (ohne Trägerfolie) im Bereich von etwa 2 bis 50 µm besitzt.

## Claims

1. A cholesteric layered material comprising at least one three-dimensionally crosslinked, aligned cholesteric layer, wherein the crosslinked cholesteric layer(s) has (have) a homogeneous interference line pattern essentially over the entire layer thickness, the interference line pattern exhibiting no line inversion and/or no eye formation.

2. A cholesteric layered material as claimed in claim 1, wherein the interference lines extend essentially parallel to the layer surface, and each cholesteric layer has an essentially smooth surface.

3. A cholesteric layered material as claimed in one of the preceding claims, wherein the cholesteric layer has a mean dry layer thickness of less than about 5 µm, in particular less than about 2 µm, preferably less than or equal to about 1 µm.

4. A cholesteric layered material as claimed in one of the preceding claims, wherein the cholesteric layer has a mean dry layer thickness of at least one pitch height.

5. A cholesteric layered material as claimed in one of the preceding claims, which comprises a plurality of cholesteric layers of identical or different thickness and identical or different chemical composition, each of which has a homogeneous interference line pattern essentially over the entire layer thickness.

6. A cholesteric layered material as claimed in one of the preceding claims, wherein the crosslinked cholesteric layer(s) exhibits (exhibit) no visually evident color shift on a temperature change and/or exposure to diluents.

7. A cholesteric layered material as claimed in claim 6, wherein the reflection maximum of the cholesteric layer(s) after treatment in xylene at 80°C for 15 minutes and subsequent drying exhibits (exhibit) no visually evident color shift.

8. A cholesteric pigment comprising at least one crosslinked, aligned cholesteric layer having a mean particle size in the range from 5 to 50 µm and a thickness of from 0.2 to 5 µm, wherein the crosslinked cholesteric layer(s) has (have) the properties indicated in one of the preceding claims.

9. A process for the production of a cholesteric layered material as claimed in claim 1, which comprises:
a) casting of a cholesteric coating composition comprising at least one crosslinkable substance onto a support with formation of a first cholesteric layer, and alignment of the layer, where the support is essentially chemically inert to the cholesteric layer to be applied;
b) drying and crosslinking of the layer, where the conditions are selected in such a way that the resultant layer has a homogeneous interference line pattern essentially over the entire layer thickness;
c) removal of the layered material from the support after one or more further aligned cholesteric layers have, if desired, been applied to the layer obtained in accordance with step a).

10. A process as claimed in claim 9, wherein a support is employed which does not adversely affect the alignment of the cholesteric layer cast thereon during drying and curing.

11. A process as claimed in one of claims 9 and 10, wherein the support has an adhesion of less than about 1 cN to the dried and crosslinked first cholesteric layer cast thereon.

12. A process as claimed in one of claims 9 to 11, wherein the support is selected from plastic, metal, glass and ceramic supports.

13. A process as claimed in claim 12, wherein the plastic support comprises a release layer of crosslinked, preferably aligned, cholesteric material onto which the first cholesteric layer is cast.

14. A process as claimed in claim 13, wherein the adhesion between plastic support and release layer is at least about twice the adhesion between release layer and first cholesteric layer.

15. A process as claimed in one of claims 9 to 14, wherein the coating compositions for the cholesteric layer(s) have a viscosity in the range from about 1 to 50 mPas, and the application rate is in the range from about 1 to 800 m/min.

16. A process as claimed in one of claims 9 to 15, wherein the crosslinking of the cholesteric layer(s) and of any cholesteric release layer present is carried out by electron beams or UV radiation with simultaneous warming of the layer to be cured, where the emitter power is from about 50 to 200 watts/cm, in particular from about 100 to 140 watts/cm, at an irradiation duration of from about 2 to 5000 msec, in particular from about 30 to 200 msec.

17. A process as claimed in claim 16, wherein the layer temperature during the radiation curing is at least about 60°C, in particular at least about 80°C, preferably at least about 90°C.

18. A process as claimed in one of claims 9 to 17, wherein a further support film is applied to the cholesteric layer applied last, and the one or more cholesteric layers are removed from the support as a composite.

19. A process as claimed in one of claims 9 to 17, wherein one or more cholesteric layers are removed from the support by blasting with compressed air, a water jet or steam and ground to give pigments.

20. A composition comprising at least one cholesteric pigment as claimed in claim 8.

21. The use of a pigment as claimed in claim 8 in the motor vehicle or motor vehicle accessory sector, in the computer, leisure, sport and toy sector, in optical components, such as polarizers or filters, in the cosmetics area, in the textiles, leather or jewelry area, in gift articles, in writing implements, or on spectacle frames, in the construction sector, in the domestic sector, in print products of all types, in the production of paints and coatings, for the anticounterfeiting treatment of articles.

22. The use of a composition as claimed in claim 20 for the coating of utility articles or for the painting of motor vehicles.

23. A polarizer comprising a layered material as claimed in one of claims 1 to 7, if desired applied to a support film.

24. A broad-band polarizer comprising a layered material as claimed in one of claims 1 to 7 having a number of from 3 to 20 cholesteric layers with reflection maxima matched to one another, where the polarizer has a total thickness (without support film) in the range from about 2 to 5 µm.

## Revendications

1. Matériau cholestérique en couches comprenant au moins une couche tridimensionnelle réticulée et orientée, **caractérisé en ce que** la (les) couche(s) réticulée(s) cholestérique(s) présente(nt), sur globalement toute l'épaisseur de la couche, une trame de lignes d'interférence homogène, moyennant quoi la trame de lignes d'interférence ne montre aucune inversion de lignes et/ou aucune formation d'yeux.

2. Matériau cholestérique en couches selon la revendication 1, **caractérisé en ce que** les lignes d'interférence sont globalement parallèles à la surface de la couche et chaque couche cholestérique présente une surface globalement plate.

3. Matériau cholestérique en couches selon l'une des revendications précédentes, **caractérisé en ce que** la couche chlolestérique présente une épaisseur moyenne de couche sèche inférieure à environ 5 µm, plus particulièrement inférieure à environ 2 µm, de préférence inférieure ou égale à environ 1 µm.

4. Matériau cholestérique en couches selon l'une des revendications précédentes, **caractérisé en ce que** le couche chloestérique présente une épaisseur moyenne d'au moins une hauteur de pitch.

5. Matériau cholestérique en couches selon l'une des revendications précédentes, **caractérisé en ce qu'**il comprend plusieurs couches cholestériques d'épaisseurs identiques ou différentes et de composition chimique identique ou différente, qui présente, sur toute l'épaisseur de la couche une trame de lignes d'interférence homogène.

6. Matériau cholestérique en couches selon l'une des revendications précédentes, **caractérisé en ce que** la (les) couche(s) réticulée(s) cholestérique(s), ne présente(nt) aucun décalage de couleur visible lors d'une modification de température ou sous l'action de diluants.

7. Matériau cholestérique en couches selon la revendication 6, **caractérisé en ce que** le maximum de réflexion de la (des) couche(s) cholestérique(s) ne présente aucun décalage de couleur visible après 15 minutes de traitement à 80°C dans du xylol et après séchage.

8. Pigment cholestérique comprenant au moins une couche réticulée orientée chloestérique avec une taille moyenne de particule entre 5 et 50 µm et une épaisseur de 0,2 à 5 µm, **caractérisé en ce que** la (les) couche(s) réticulée(s) cholestérique(s) présente(nt) les propriétés mentionnées dans les revendications précédentes.

9. Procédé de fabrication d'un matériau cholestérique en couches selon la revendication 1, **caractérisé par** :
a) coulée d'une masse de revêtement cholestérique comprenant au moins une substance réticulable, sur un support, avec la formation d'une première couche cholestérique et orientation de la couche, moyennant quoi le support est inerte chimiquement par rapport à la couche cholestérique à appliquer ;
b) Séchage et réticulation de la couche, moyennant quoi les conditions sont choisies de telle sorte que la couche obtenue présente sur toute son épaisseur une trame de lignes d'interférence homogène ;
c) élimination du matériau en couches du support après que, le cas échéant, une ou plusieurs couches orientées cholestériques aient été appliquées sur la couche obtenue à l'étape a).

10. Procédé selon la revendication 9, **caractérisé en ce qu'**un support est utilisé, qui ne perturbe pas l'orientation de la couche cholestérique coulée dessus pendant le séchage et le durcissement.

11. Procédé selon l'une des revendications 9 et 10, **caractérisé en ce que** le support présente une force d'adhérence inférieure à environ 1 cN par rapport à la première couche cholestérique séchée et réticulée qui a été coulée dessus.

12. Procédé selon l'une des revendications 9 à 11, **caractérisé en ce que** le support est choisi parmi un support en matière plastique, en métal, en verre ou en céramique.

13. Procédé selon la revendication 12, **caractérisé en ce que** le support en matière plastique comprend une couche anti-adhésive constituée d'un matériau cholestérique réticulé, de préférence orienté, sur laquelle la première couche cholestérique est coulée.

14. Procédé selon la revendication 13, **caractérisé en ce que** la force d'adhérence entre le support en matière plastique et la couche anti-adhésive est au moins environ deux fois plus importante que la force d'adhérence entre la couche anti-adhésive et la couche cholestérique.

15. Procédé selon l'une des revendications 9 à 14, **caractérisé en ce que** les masses de revêtements pour la (les) couche(s) cholestérique(s) présente(nt) une viscosité d'environ 1 à 50 mPas et la vitesse d'application est d'environ 1 à 800 m/min.

16. Procédé selon l'une des revendications 9 à 15, **caractérisé en ce que** la réticulation de la (des) couche(s) cholestérique(s) et de l'éventuelle couche anti-adhésive est réalisée à l'aide d'un rayonnement d'électrons ou d'un rayonnement UV avec chauffage simultané de la couche à durcir, moyennant quoi la puissance de rayonnement est d'environ 50 à 200 Watt/cm, plus particulièrement d'environ 100 à 140 Watt/cm, avec une durée d'irradiation d'environ 2 à 5000 ms, plus particulièrement d'environ 30 à 200 ms.

17. Procédé selon la revendication 16, **caractérisé en ce que** la température de la couche pendant le durcissement par irradiation est d'au moins environ 60°C, plus particulièrement d'environ 80°C, de préférence d'au moins environ 90°C.

18. Procédé selon l'une des revendications 9 à 17, **caractérisé en ce que** ce qu'on applique, sur le dernière couche cholestérique appliquée, un autre film support et en qu'on retire du support la ou les couches cholestériques du compound.

19. Procédé selon l'une des revendications 9 à 17, **caractérisé en ce qu'**on retire la ou les couches cholestériques du support par soufflage avec de l'air comprimé, par jet d'eau ou de vapeur et en qu'on les broie pour obtenir des pigments.

20. Composition, comprenant au moins un pigment cholestérique selon la revendication 8.

21. Utilisation de pigments selon la revendication 8 dans le secteur de l'automobile ou des accessoires automobiles, dans le secteur de l'informatique, des loisirs, du sport et du jeu, dans des composants optiques, comme des polarisateurs ou des filtres, dans le domaine des cosmétiques, du textile du cuir ou des bijoux, pour des articles-cadeaux, des ustensiles d'écritures, ou des montures de lunettes, le secteur du bâtiment, le secteur domestique, des produits d'impression de toutes sortes, pour la fabrication de vernis ou de peintures, pour le traitement anti-falsification d'objets.

22. Utilisation d'une composition selon la revendication 20 pour le revêtement d'objets usuels ou pour la peinture de véhicules.

23. Polarisateur comprenant un matériau en couches selon l'une des revendications 1 à 7, appliqué, le cas échéant, sur un film support.

24. Polarisateur à large bande, comprenant un matériau en couches selon l'une des revendications 1 à 7 avec un nombre de 3 à 20 couches cholestériques avec des maxima de réflexion harmonisés les uns avec les autres, moyennant quoi le polarisateur présente une épaisseur totale (sans film support) d'environ 2 à 50 µm.
